# EUROPEAN PATENT SPECIFICATION

(11) **EP 2 929 942 B1**
(45) Date of publication and mention of the grant of the patent: **13.02.2019**
(21) Application number: 14200235.1
(22) Date of filing: 23.12.2014
(51) Int. Cl.: B03D 1/14, B01D 21/00, C02F 1/00, B01D 21/24, B01D 21/34

(54) **Apparatus for removal of floatables and scum in a waste water treatment system**
Vorrichtung zur Entfernung von Schwimmstoffen und Abschaum in einer Abwasserreinigungsanlage
Appareil d'élimination de flottables et de mousse dans un système de traitement d'eaux usées

(30) Priority: 27.12.2013 US 201314142099; 21.08.2014 US 201414464870
(43) Date of publication of application: 14.10.2015
(73) Proprietor: ClearCove Systems, Inc., Rochester, NY 14623 (US)
(72) Inventor: Wright, Terry, Rochester, New York 14610 (US); Parker, Leonard A., Pittsford, New York 14534 (US)
(74) Representative: Emde, Eric

(56) References cited:
- EP-A1- 1 700 963
- JP-A- H0 365 298
- JP-A- 2002 001 310
- US-A- 2 401 745
- US-A- 3 717 257
- US-A- 4 009 106
- US-A1- 2003 164 341
- US-A1- 2010 018 929

## Description

### FIELD OF THE APPLICATION

The application relates to a method and apparatus for removing floatables and scum in a wastewater treatment system and particularly to improvements in the removal of floatables and scum at or near an entrance to the water treatment system.

### BACKGROUND

Waste water treatment systems used in the industry generally include, but are not limited to, the following treatment processes: grit removal, fine screening, flow equalization and primary clarification. The typical treatment processes are dependent on the velocity at which the waste water is moving through the system. Waste water, however, is not produced continually by humans, but instead is created in batch type processes, such as showering, flushing a toilet or operating a washing machine. Such water consumptive activities are generally repetitive resulting in daily, weekly, monthly and yearly diurnal flow patterns for a specific waste water treatment system. Accordingly, the volume of waste water produced, and the velocity of that waste water through the treatment system varies significantly throughout the day.

### SUMMARY

A waste water treatment system includes a clarification tank having a clarification tank wall. An influent feed system (IFS) is mechanically mounted within and adjacent to a wall of the clarification tank and configured to receive a waste water influent stream including a fluid. A scum trough is mechanically coupled to either the IFS or the clarification tank. The scum trough has a scum trough mouth and a scum trough discharge channel. The scum trough is movable, or a portion of the scum trough includes a moveable structure, to control a rate of fluid in-take of the fluid with scum and floatables from either of the IFS or the clarification tank.

The scum trough may include a height adjustment structure which allows the scum trough to be lowered to cause an in-take of surface fluid into the scum trough.

The waste water treatment may include a mechanical agitator to cause surge waves in either of the IFS or the clarification tank to lift floatables or scum above a height of the mouth of the trough.

The waste water treatment may include an air bubbler to cause an in-take of the fluid into the scum trough through air scouring by air bubbles generated in the fluid to move the fluid with scum and floatables in a direction of the scum trough.

The air bubbles generated by an air bubbler lift the floatables or scum above a height of the mouth of the trough.

The waste water treatment may include at least a first rotatable scum trough member cylindrically rotatable about another second scum trough member to adjust a height of the mouth of the scum trough.

The scum trough may be disposed substantially adjacent to the wall of a rectangular clarification tank or a square clarification tank.

The scum trough may include rows of teeth including a first circular row of teeth coaxially disposed within a second circular row of teeth, each tooth of the rows of teeth separated from an adjacent tooth by a gap, each of the rows of teeth rotatable with respect to each other to open the scum trough for a maximum in-take fluid when the teeth are aligned substantially adjacent each other and for a minimum intake of fluid when the teeth of one of the rows of teeth is disposed substantially adjacent to gaps in the other of the rows of teeth.

The scum trough may be disposed substantially adjacent to the wall of a cylindrical clarification tank.

A waste water system may include a clarification tank having a clarification tank wall. An influent feed system (IFS) is mechanically mounted within and adjacent to a wall of the clarification tank and configured to receive a waste water influent stream including a fluid. A scum trough is mechanically coupled to either the IFS or the clarification tank, the scum trough having a scum trough mouth and a scum trough discharge channel. A fluid level adjustment structure allows a fluid level of the waste water influent stream to rise above a fluid level of the scum trough to cause an in-take of surface fluid into the scum trough.

A waste water system may include an air bubbler to cause an in-take of the fluid into the scum trough through air scouring by air bubbles generated in the fluid to move in a direction of the scum trough.

The plurality of air bubbles generated by an air bubbler lifts floatables or scum above a height of the mouth of the trough.

According to another aspect, a method to remove scum and floatables from a waste water stream including the steps of: providing a single tank primary treatment system including a clarification tank, an influent feed system (IFS) with a scum trough having a mouth and a scum trough discharge channel; filling the IFS with the waste water stream with a fluid including scum or floatables; adjusting a position of the scum trough or a structural member of the scum trough to control a flow of fluid into the mouth of the scum trough; flowing the fluid into the mouth of the scum trough from either of the IFS or the clarification tank to cause a trough in-take; and carrying away the scum and floatables via the scum trough into the scum trough discharge channel.

The step of adjusting the position of the scum trough may include adjusting the position of the scum trough by lowering the trough with respect to a surface of the fluid in the IFS.

The step of adjusting the position of the scum trough may include adjusting the position of the scum trough by lowering or rotating the structural member of the trough with respect to a surface of the fluid in the IFS.

The step of adjusting the position of the scum trough may include rotatingly adjusting a first circular row of teeth and gaps with respect to a second coaxially disposed second circular row of teeth and gaps.

According to yet another aspect, a method to remove scum and floatables from a waste water stream including the steps of: providing a single tank primary treatment system including a clarification tank, an influent feed system (IFS) with a scum trough having a mouth and a scum trough discharge channel; filling the IFS with the waste water stream including a fluid including scum or floatables; perturbing mechanically the fluid in either of the IFS or the clarification tank to control a flow rate of the fluid into the mouth of the scum trough; flowing the fluid into the mouth of the scum trough from either of the IFS or the clarification tank to cause a trough in-take; and carrying away the scum and floatables via the scum trough into the scum trough discharge channel.

The step of perturbing mechanically the fluid in either of the IFS or the clarification tank may include causing surge waves that floatables or scum above a height of the mouth of the trough.

The step of perturbing mechanically the fluid in either of the IFS or the clarification tank may include air scouring by gas bubbles generated in the fluid to lift floatables or scum above a height of the mouth of the trough.

According to yet another aspect, a method to remove scum and floatables from a waste water stream including the steps of: providing a single tank primary treatment system including a clarification tank, an influent feed system (IFS) with a scum trough having a mouth and a scum trough discharge channel; filling the IFS with the waste water stream with a fluid including scum or floatables; raising a fluid level in the clarification tank over a height of the mouth of the scum trough to control a flow of fluid into the mouth of the scum trough; flowing the fluid into the mouth of the scum trough from either of the IFS or the clarification tank to cause a trough in-take; and carrying away the scum and floatables via the scum trough into the scum trough discharge channel.

The foregoing and other aspects, features, and advantages of the application will become more apparent from the following description and from the claims.

### BRIEF DESCRIPTION OF THE DRAWINGS

The foregoing and other objects, features, and advantages of the application will be apparent from the following drawings and more particular description of the various exemplary embodiments described hereinbelow.
FIG. 1 is a perspective view of an exemplary embodiment of a primary treatment system;
FIG. 2 is a partial-cutaway perspective view of the primary treatment system of FIG. 1;
FIG. 3 is a perspective view of the system of FIG. 1 including an exemplary screen box assembly;
FIG. 4 is a partial-cutaway perspective view of the system of FIG. 1;
FIG. 5 is a partial-cutaway perspective view of the system of FIG. 1 showing an alternate embodiment;
FIG. 6 is a partial-cutaway perspective view of the system of FIG. 1:
FIG. 7 is a partial-cutaway perspective view of the system of FIG. 1;
FIG. 8 is a partial-cutaway perspective view of the system of FIG. 1;
FIG. 9 is a partial cut-away front elevation view of the system of FIG. 3;
FIG. 10 is a partial cut-away front elevation view of the system of FIG. 3;
FIG. 11 is a partial cut-away front elevation view of the system of FIG. 3;
FIG. 12 is a partial cut-away front elevation view of the system of FIG. 3;
FIG. 13 is a partial cut-away front elevation view of the system of FIG. 3;
FIG. 14 is a partial cut-away front elevation view of the system of FIG. 3;
FIG. 15 is a partial cut-away front elevation view of the system of FIG. 3;
FIG. 16 is a partial cut-away front elevation view of the system of FIG. 3;
FIG. 17 is a partial cut-away front elevation view of the system of FIG. 3;
FIG. 18 is a partial cut-away front elevation view of the system of FIG. 3;
FIG. 19 is a partial cut-away front elevation view of the system of FIG. 3;
FIG. 20 is a partial cut-away view of the system of FIG. 3 illustrating the backwash cycle;
FIG. 21 is a partial cut-away view of the system of FIG. 3 illustrating the backwash cycle;
FIG. 22 is a perspective view of the system of FIG. 3 illustrating the backwash cycle;
FIG. 23 is a perspective view of the system of FIG. 3 illustrating the backwash cycle;
FIG. 24 is a partial cut-away front elevation view of an alternative embodiment of the system of FIG. 1;
FIG. 25 is a top plan view of the embodiment of FIG. 24;
FIG. 26 shows an interior cross-section drawing of an exemplary embodiment of an apparatus to remove scum and floatables from a single tank system;
FIG. 27 shows an exterior cross section drawing of the system to remove scum and floatables of FIG. 1;
FIG. 28 shows a side view of the system to remove scum and floatables of FIG. 1;
FIG. 29 shows a top view of the system to remove scum and floatables of FIG. 1;
FIG. 30 shows a top view of another embodiment of a system to remove scum having a circular tank design;
FIG. 31A shows an exemplary articulating scum trough in a closed position;
FIG. 31B shows the exemplary articulating scum trough of FIG. 31A in an opened position;
FIG. 32A shows another exemplary rotationally articulating scum trough in a closed position;
FIG. 32B shows the exemplary rotationally articulating scum trough of FIG. 32B in an opened position;
FIG. 33 shows a flow chart of a method to remove scum and floatables from a waste water stream by mechanical perturbation;

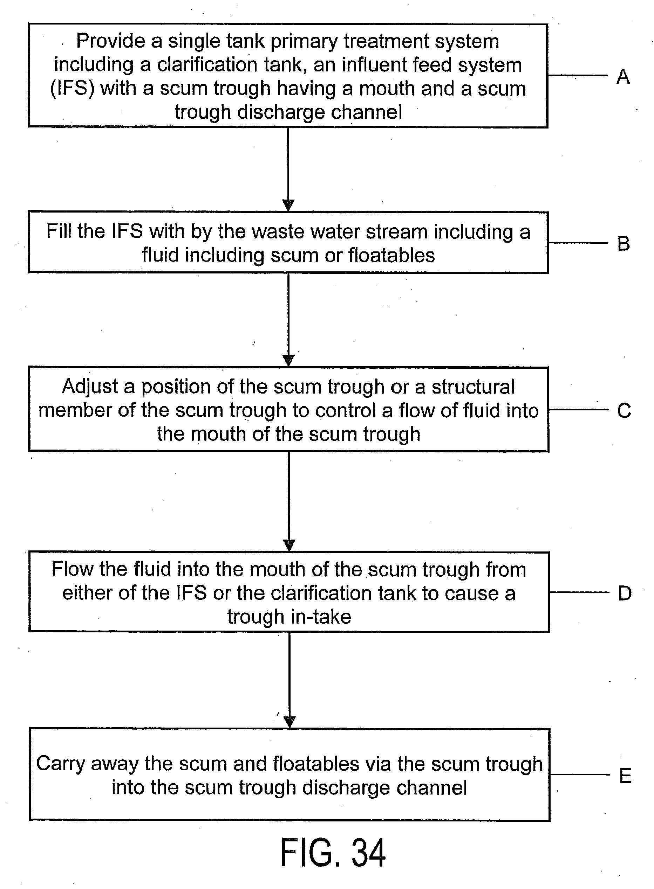

FIG. 34 shows a flow chart of another method to remove scum and floatables from a waste water stream;
FIG. 35 shows a flow chart of yet another method to remove scum and floatables from a waste water stream by raising the level of fluid in the clarification tank;
FIG. 36A shows a portion of an exemplary rotationally articulating scum trough in a closed position;
FIG. 36B shows a portion of an exemplary rotationally articulating scum trough in a partially open position; and
FIG. 36C shows a portion of an exemplary rotationally articulating scum trough in a closed position.

The features of the application can be better understood with reference to the drawings described below, and the claims. The drawings are not necessarily to scale, emphasis instead generally being placed upon illustrating the principles described herein. In the drawings, like numerals are used to indicate like parts throughout the various views.

### DETAILED DESCRIPTION

As described hereinabove, waste water treatment systems used in the industry generally include, but are not limited to, the following treatment processes: grit removal, fine screening, flow equalization and primary clarification. The typical treatment processes are dependent on the velocity at which the waste water is moving through the system. Waste water, however, is not produced continually by humans, but instead is created in batch type processes, such as showering, flushing a toilet or operating a washing machine. Such water consumptive activities are generally repetitive resulting in daily, weekly, monthly and yearly diurnal flow patterns for a specific waste water treatment system. Accordingly, the volume of waste water produced, and the velocity of that waste water through the treatment system varies significantly throughout the day.

Grit removal in a wastewater treatment system is generally performed in a grit chamber which is velocity sensitive. The most common methods to remove grit are by reducing the velocity of the influent flow so that the grit settles out, or utilizing a circular channel/tank. The circular channel/tank is a hydro-cyclone that causes the grit to settle in a sump, separating the organics from the grit so that they can move forward to the biological processes. The grit is then pumped out of the sump to a grit washer and then discharged to a dumpster for disposal at a landfill.

Fine screening is typically accomplished by placing a screen in an influent channel. The influent channel must have a minimum velocity of 1.25 feet per second to keep solids from settling out in the channel and a maximum velocity of 3.0 feet per second to keep solids from being forced through the screen. Such a flow is difficult to achieve due to the large variation in diurnal and pumped flow patterns.

Typical primary clarifiers are also velocity sensitive with the heavy solids going to the base of the clarifier where they are pumped to a digester, the floatable solids, grease and scum are trapped and skimmed off the surface and the neutral buoyant solids/clarified waste water exits the basin via an effluent weir. Primary clarifiers are typically large tanks designed for gravity settling and may include electrical drives, flights and chains, rack arms and paddles or suction tubes and sludge pumps.

Flow equalization typically occurs in a separate tank. The flow at the waste water plant is subject to travel times in the collection system, collection system design and pump station sizing. In general, larger collection systems use pump stations to lift the waste water to the treatment facility. The pumps are typically placed on variable-frequency drives in an attempt to provide a consistent uniform flow. The system of variable-frequency drives and pumps, however, fails in low and high flow conditions. The pumps must be designed for peak hourly flows and have minimum turn down capabilities.

Traditional waste water treatment plants have static bar racks or mechanically cleaned bar screens in channels at the entrance of the waste water into the treatment facility. These influent channels are typically constructed of concrete so as to last the life of the facility and are designed for specific waste water volumes, velocities (1 to 3 feet per second), and the insertion of specific screening and grit removal equipment.

The social behavior of flushing solids that should go to landfill such as baby wipes, diapers, swizzle sticks, condoms, tampon applicators, etc. creates issues for the operation of the waste water treatment facility. Many of these solids are neutrally buoyant or will float in the waste water. Elongated solids align with the flow and pass or are forced through the bar racks or mechanical screens because of the high flow. The flat sheet solids such as diapers and baby wipes cover the bar racks or screens causing the liquid level in the channel to rise and enter a bypass channel. These solids often end up creating issues in the treatment plant such as fouling pumps, valves, diffusers, and membranes ultimately ending up in the digester or sludge holding tank.

The increase in frequency and intensity of storm events producing exceptional precipitation combined with leaky sewage collection systems produces greater volumes of waste water delivered to the waste water treatment plant. Changes in societal behavior are not likely to occur. The cost to repair or replace the aged collection systems of developed nations is not fiscally achievable in the time frame needed. Therefore, the limited cross-sectional area of a channel requires an innovative approach to solve the above issues. The solution must be efficient in consideration of the goal to convert energy consumptive waste water treatment plants to sustainable resource recovery facilities where possible.

To accomplish the above, the current application replaces influent channels with tanks, inclusive of a novel scum trough to selectively remove undesired scum and floatables. Waste water design engineers and manufacturers of screening equipment recognize that high velocities and screening are in conflict. Yet the use of channels at the head of the waste water treatment process is still taught to engineering students and designed into waste water treatment plants today.

Recently, a single tank waste water treatment system was developed which eliminates many problems associated with the prior art designs. The system comprises a single primary settling tank that performs grit removal, flow equalization, primary clarification and fine screening. This waste water treatment system is described in U.S. Patent No. 7,972,505, the disclosure of which is incorporated by reference herein.

The system is suitable for use with industrial and municipal waste water treatment. It is also useful for clarifiers, settling tanks or biological processes such as sequencing batch reactors that have changes in liquid elevations in these tanks and for industrial process waste waters containing high or low specific gravity constituents.

The present system increases the surface area of the screen in contact with the liquid by placing the screens in a tank having an influent feed trough, not a channel, to further reduce the velocity at the liquid at the screen interface. The influent feed trough also changes the flow direction at the screen face to prevent elongated items from aligning with the flow. Elongated items align with the flow and pass through the screens. High velocities will push the larger pliable solids through the screen openings. The present system operates at a reduced water velocity, trapping all solids larger than the screen openings between the tank wall and the screen face. The trapped floatables rise with the liquid in the tank to the top of the screen where a scum trough is in close proximity to the screen. The scum trough is valved to control the liquid flow exiting the tank from the surface. A control system allows the operator to manually open the valve or set the number of tank fill cycles between scum withdrawals. When the liquid is above the trough and the valve is opened, the surface liquid moves towards the trough and then exits the tank. The liquid movement towards the trough moves the scum and floatables to the trough. The liquid transporting the scum and floatables out of the tank discharges into the collection box with an integral basket of fine mesh. A disposable bag may line the interior of the basket. Also, polymers, adsorbents or absorbents may be added to the interior of the disposable bag to capture hydrocarbons or other constituents specific to the waste water being treated. The operator manually disposes of the bag when it is full. The collection box, basket, and bags are volumetrically sized to handle the volume of solids and scum from multiple cycles which allows the captured constituents to be washed with the liquid transporting the scum and floatables. The liquid passing through the scum basket and/or bag returns to the adjacent tank or may be directed to another process for further treatment.

In the traditional treatment of waste water, tanks are used for flow equalization, clarification, aeration and storage of liquids and or solids.Channels are used as pipes to convey liquids laden with solids from one point to another for treatment. Channels are sized to maintain a velocity of 1 to 3 feet per second to keep solids in suspension. This high velocity pushes solids into and often times through the screen openings.This requires the use of high pressure water, mechanical rakes or scrapers, or brushes to physically remove the solids from the screen openings. It prevents the use of ultrafine screens as the headloss is high and would require a deeper channel upstream of the screen. These ultrafine screens are needed for new waste water process technologies like membranes. The velocity of 1 to 3 feet per second also prevents dietary fibers or soluble biological oxygen demand (SBOD) constituents to settle.The SBOD requires energy to convert to biomass and CO2 where if it could settle, it could be used to generate biogas, such as methane, to power micro-turbines to generate electricity or cleaned to produce compressed natural gas or propane. The dietary fibers cause fouling of hollow fiber membranes, the larger solids plug the flat plate membranes resulting in high energy to scour the membranes.The fouling or plugging of the membranes reduces their life cycle thus increasing operational issues and replacement costs. Unexpected flows from aged collection systems and increased storm intensities cause these traditional systems to cease to function properly. By using tanks instead of channels there is more screen surface area in contact with the waste water liquid so the velocity at the screen/liquid interface is much lower. Tanks can be wider and deeper than channels so the cross-sectional area of the liquid is much larger and the forward velocity is significantly less. The slower the forward and rise velocities, the greater the surface and cross-sectional areas the greater the ability for dense solids, like grit, to settle and for the light solids and liquids to float.This reduces the solids coming in contact with the screen. It allows for screens having smaller openings to be used with less headloss and cleaning required. Static screens may be used as the solids are not being forced into and lodging in the openings. It allows for higher than expected future flows to be handled effectively as there is more screen surface area.

The system provides a modular scum and floatables capture system for the retention and directional movement of soluble and solid constituents having a specific gravity of less than 1.0, floatable screenings, removal of retained floatables and scum, and washing of floatables found in waste water (combined sewers, sanitary sewer, petroleum spills, and industrial process waters). The system is installed in a tank or tanks that have liquid elevations that vary between a high and a low liquid level and have one or more inlet troughs or weirs. Scum and floatable content may consist of fats, oils, grease, liquid and solids having a specific gravity less than 1.0 such as petroleum products and solids having trapped air to cause objects with a specific gravity greater than 1.0 to float.

The system consists of stationary or mechanical bar screens, rotational scum troughs, control system to operate actuated valves in manual or automatic modes, actuated valves and slide gates, collection boxes placed inside or outside the tank with each having a removable capture basket that may or may not have a disposable liner bag or just a disposable bag without a basket.An adsorbent may be placed in the disposable bags to capture specific constituents in the waste water such as petroleum products that would separate during the clarification process and rise to the surface of the liquid.

Stationary or mechanical screens are placed between the interior edge of an influent weir or trough and the tank wall with the waste water entering between the screen and tank wall.The screen may be perpendicular to the liquid surface or vertically inclined and rise to a close proximity (e.g. less than 0.5 inches) of the scum trough at the high liquid level in the tank.The screen can be the same dimension or shorter than the horizontal dimension of the scum trough.The screen is set back from the edge of the weir to increase the screen surface area in contact with the liquid (as the weir slopes downward at a 60 - 90 degree angle towards the wall) and not to create a disturbance of the liquid at the edge of the weir causing the velocities to be higher and uneven, which might result in a break in cohesion or surface tension to the surface of the weir. Elongated objects will align with the flow so when the liquid turns 90 degree to enter the tank the largest dimension (long dimension) of the solid is perpendicular to the screen.Both the low velocity and causing the elongated side of the solid to be parallel to the screen, prevents solids from being wedged into the open spaces of the screen. This leaves the solids free to move vertically with the liquid level of the tank.

The collection box may be located inside or outside of the tank depending on the application. If the floating and separated soluble constituents in the surface water are to be adsorbed or reused then the collection box will likely be located outside of the tank so the liquid does not continue to move back and forth between the adjacent tanks creating a concentration loop.The low specific gravity liquids and water will be properly directed to further treatment processes. If there is no adsorption or reuse of the liquid constituents the collection box will likely be placed inside the tank, above the grit box, so the liquid free falls down into the grit box.The exterior walls of the grit box are closed and sealed, and rise to an elevation above the highest liquid level in the tank. Should some floatable solids fall from the basket they remain trapped between the screen and tank wall.The liquid falling into the grit box will then travel into the feed trough and over the weir into the tank.This is efficient because the tank receiving the conveyed liquid along with the floatable solids and scum has a low liquid level and will enter into a fill cycle when the scum cycle in the adjacent tank ends.Current scum cycles require significant amount of transport liquid to move the solids via pumps and piping to the next process.Often the next process is a sludge holding tank or digester and then to a belt press. This surplus liquid from conveying the floatables is then decanted from the surface of the scum holding tank or digester and pumped back to the head of the waste water treatment plant for reprocessing.This increases capital costs, energy consumption, and operation and maintenance costs to keep pipes and pumps free of these solids and FOG (Fats, Oils, Grease)

When a scum cycle takes place the liquid is at the high level or slightly higher than the scum trough weir the actuated valves open.The scum troughs between adjacent rectangular tanks are common.There are two types of operations possible. In one, the collection box is located inside the tank - one tank has a high liquid level (tank A) and the other tank (tank B) has a low liquid level. A valve at the common wall dividing the adjacent tanks is normally closed until a scum cycle is manually or automatically initiated. When this valve is opened, the liquid in and above the scum trough in tank A moves through the connected scum troughs carrying the scum and floatables to the scum basket or bag located in the collection box of tank B. The scum and floatables are captured in the basket or bag and the liquid returns to the grit chamber and influent feed system of tank B. In the other, the collection box is located outside the tank - one tank has a high liquid level (tank A) and the other tank (tank B) has a low liquid level. A valve at the common wall dividing the adjacent tanks is normally closed until a scum cycle is manually or automatically initiated. When this valve is opened, the liquid in and above the scum trough in tank A moves through the connected scum troughs carrying the scum and floatables to the scum basket or bag located in the collection box located outside of tank B.The scum and floatables are captured in the basket or bag and the liquid is directed to another process.This option is used when the clarified liquid at the surface is to be reused or processed further such as cleanup of fuel spills.

The system can also be used with two circular tanks adjacent to each other. Each tank can have an internal circular bar screen that extends to the same elevation as the outside wall of the scum trough. The scum trough is circular, located at the top of the tank, has an outer wall higher than the tank wall, the tank wall serves as the inside wall of the scum trough and the bottom of the trough is lower than the top of the tank.Each scum trough has a collection box with a basket or bag located inside to capture the floatables, there is a drain pipe at the bottom of the box that slopes downward and connects to the adjacent circular tank.There is a weighted flap valve at the inlet to the adjacent tank. One tank has a high liquid level (tank A) and the other tank (tank B) has a low liquid level.When tank A is selected to undergo a scum cycle the influent pump continues to add liquid to tank A raising the liquid above the tank wall so the floatable and scum flow over the tank wall and into the trough.The liquid carries the scum and floatables to the opening in the bottom of the trough, falls through the basket onto the bottom of the collection box, down the drain pipe to tank B. The process is the same for a tank B scum cycle.

The solid scum and floatables are captured in the basket and/or bag as the liquid passes through the basket or bag and returns to the adjacent tank having a low liquid level or to the influent pump station and returned to the tank once again free of scum and floatables or to another treatment process. The basket and or bag are sized for the projected volume of floatables collected over multiple scum cycles. This allows the captured floatables to be washed multiple times with each cycle.

The rotational scum trough is a pipe cut lengthwise thus forming 2 weirs.A rotational scum trough rests at each end and has a rod running vertically.When the rod is at the 12:00 o'clock position both weirs are at the same elevation. If the rod is rotated to the 11:00 o'clock position then the weir on the left lowers and the weir on the right rises.If the rod is moved to the 1:00 o'clock position, the liquid enters the scum trough from the low side or right side. Typically the rod will be tilted towards the bar screen to pull the trapped floatables and scum into the scum trough.

Periodically the operator will need to draw off the scum that passes through the screen into the main body of the tank on the opposite side of the screen.

The system also includes a bar screen backwash and influent feed trough scour cycle.An actuated slide gate is positioned on an opening in the common dividing wall as close to the high point of the sloped bottom of the influent feed trough.The actuated slide gate controls flow from the full tank to the low liquid level tank.Over time solids are expected to settle in the feed trough and fibers to staple to the bar screen. To address this issue the following operation takes place. On completion of a scum cycle in tank A the grit valve in tank B opens. The solid laden liquid in the influent feed trough drains to the grit box and exits tank B to another treatment process. At a user defined time frame or visual (manual) activation, the actuated slide gate opens and liquid exits tank A to tank B scouring the influent trough of tank B and carrying solids and liquid to the grit box and exits the system. The liquid in tank A flows from the decanter side of the bar screen towards the influent feed system.This reversal of normal flow will dislodge many of the solids and fibers attached to the bar screen as the influent velocity through the bar screen is very low so the solids are not wedged into the screen.This action will minimize the need to physically clean the bar screen. The slide gate will open for a short period of time and only one bar screen will be backwashed at a time to minimize the volume of liquid exiting via the grit box drain.

In summary, the system provides a waste water treatment system including at least two primary settling tanks wherein processes of grit removal, sludge removal, primary clarification, and fine screening are carried out. The settling tanks have a waste water level which changes over time between a high level near the top of the primary settling tanks and a low level nearer near the bottom of the primary settling tanks. The waste water treatment system includes an influent feed basin and an influent feed trough which cause water to flow in a direction parallel to the bar screen. Each primary settling tank has a fine screen box which moves in vertical location, between a low level nearer the bottom of the primary settling tank and a high level wherein the screen box is above the high level of the waste water at the start of the scum or decant cycles. The fine screen boxes include a water outlet for removal of screened waste water from within the fine screen boxes. The fine screen boxes have fine screen material with openings of a first size. Each primary settling tank has a bar screen with screen openings of a second size larger than the openings of the first size. The bar screen is located in influent feed trough with a base of the bar screen lower than a weir in the feed trough. This reduces the velocity through the bar screen when the liquid level in the tank is below the influent feed trough weir.

The slope of the influent feed trough allows for additional screen surface area. By moving the bar screen away from the weir, the deeper the bar screen goes thus increasing the area of the surface / liquid interface.Another aspect of moving the bar screen back from the weir edge is it improves laminar flow over the weir.If the bars were placed at the weir edge turbulence at the weir edge would be created thus affecting the surface tension and cohesion of the liquid to the exterior face of the trough. Each primary settling tank has a water inlet for introducing waste water to the primary settling tank. The waste water contains scum and floatables. Each primary settling tank has a water inlet area separated from a portion of the primary settling tank by the bar screen. Each primary settling tank has a scum and floatables trough on a side of the bar screen opposite the water inlet for collecting scum and floatables which passes over a top edge of the bar screen. The scum and floatables trough can be rotatably mounted such that it can rotate about its longitudinal axis. The scum and floatables trough of a first primary settling tank, and of a second primary settling tank are in fluid communication with one another and are separated by a scum valve. When the scum valve is open, scum, floatables and water in the scum and floatables trough flow from the scum and floatables trough of the first primary setting tank to the scum and floatables trough of the second primary settling tank. Each scum and floatables trough has a collection container for collecting the scum and floatables that flows through the scum and floatables trough. The collection container could be in the form of a basket or a bag which retain the floatables and allow the water to pass through the basket. The basket or bag is removable such that they may be removed and emptied by an operator of the system. The primary settling tank includes an influent feed basin such that the velocity of the water flowing through the bar screen is decreased. The waste water treatment system includes a weir such that water flowing over the weir flows in a generally laminar flow down the exterior surface of the weir reducing air entrainment that may cause the sludge to float.

The waste water treatment system includes a backwash valve on the same side of the bar screen as the water inlet such that when the water inlet is closed and the backwash valve is open, water flows from the primary settling tank through the bar screen and through the backwash valve so that water and debris caught in the bar screen on the full tank are removed from the bar screen

Throughout the following description, specific details are set forth in order to provide a more thorough understanding of the application. However, the system and method described hereinbelow may be practiced without these particulars. In other instances, well known elements have not been shown or described in detail to avoid unnecessarily obscuring the disclosure. Accordingly, the specification and drawings are to be regarded as illustrative rather than restrictive. It is to be further noted that the drawings are not to scale.

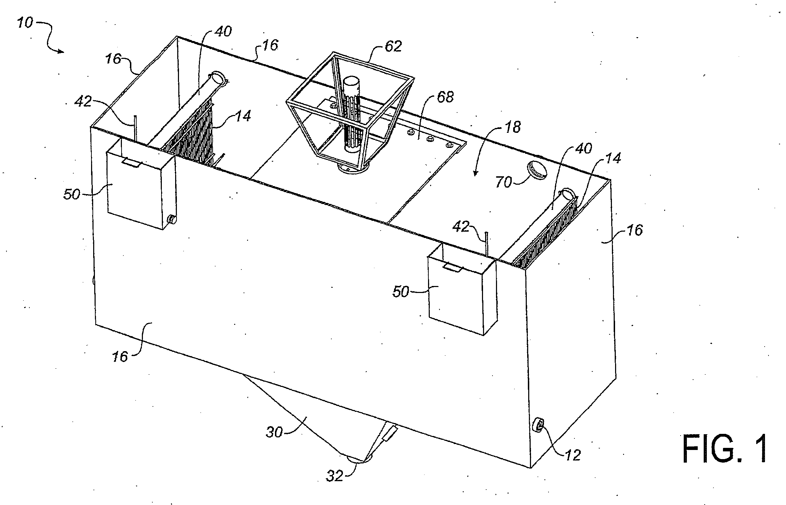

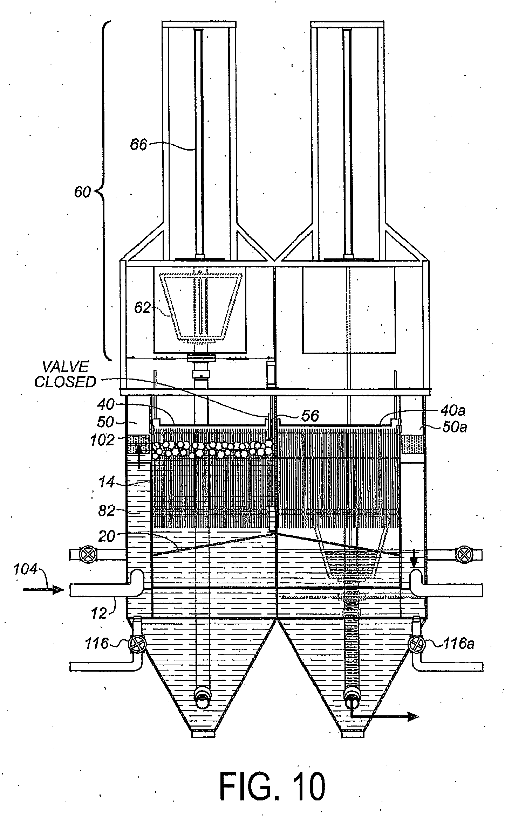

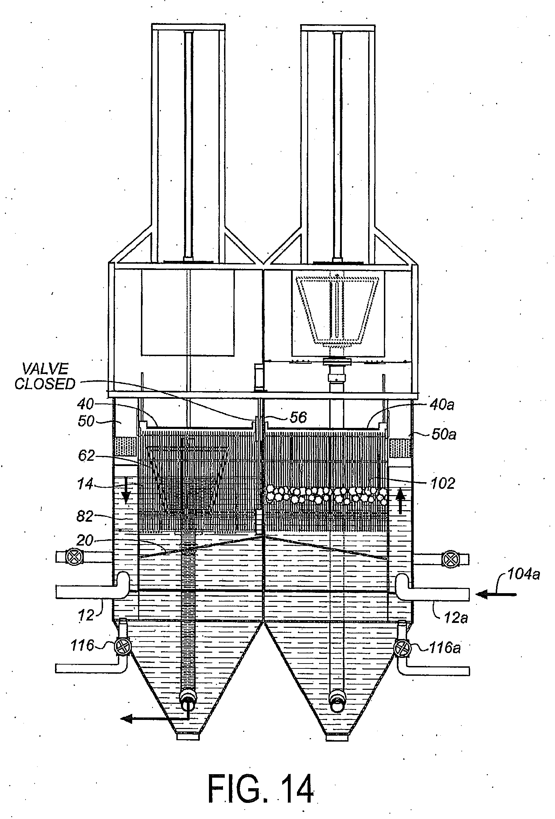

Figures 1 through 25 illustrate an exemplarysystem for the primary treatment of waste water.

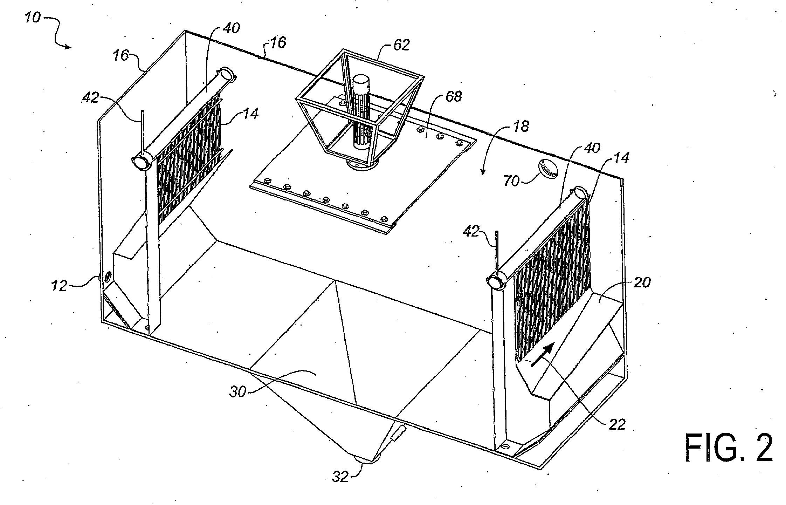

FIGS. 1 and 2 show a primary settling tank 10 which receives waste water from a waste water collection system through an influent pipe 12. The waste water treatment system may also be used in other applications that benefit from an equalized flow into the waste water treatment processes, such as industrial batch discharges, storm water, and septic receiving at a waste water treatment plant. Waste water reaches the waste water treatment system as a result of gravity, the operation of pumps, or both. The primary setting tank has outer walls 16. A bar screen 14 is placed in the primary settling tank 10 between the outer wall 16 and the interior 18 of the primary setting tank 10. The bar screen 14 keeps large inorganic solids from entering the waste water treatment system.

The primary settling tank 10 is sized based on the daily flow patterns for the collection system using generally known engineering practices. The size of the primary settling tank 10 is large compared to the influent pipe 12 such that the velocity of the incoming flow decreases dramatically upon entrance of the water into the primary settling tank 10.

The first stage of reducing the incoming velocity is to split the flow so there are two influent pipe 12.

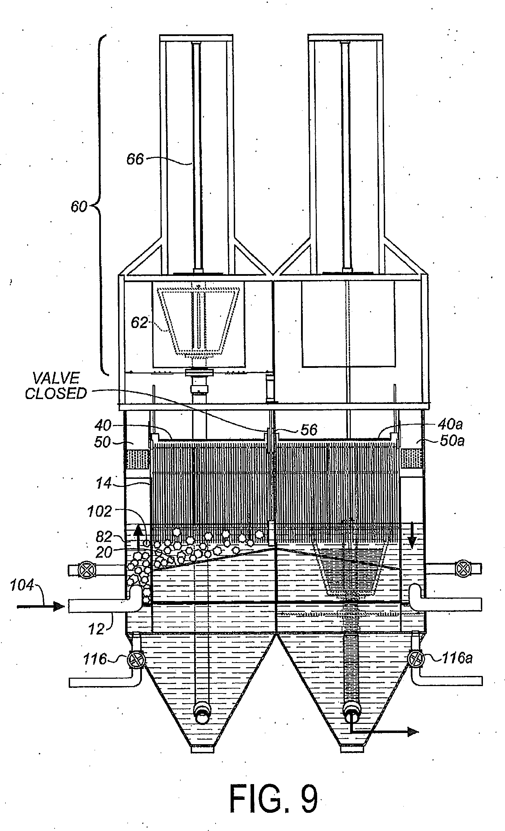

Fig. 2 shows the primary settling tank 10 with portions cut away to illustrate the interior features. An influent feed trough 20 receives the incoming waste water and directs the flow in the direction of arrow 22. As the water level rises to the level of the bar screen 14, scum and sludge (not shown) pass through the bar screen 14. Floatables 102 (See Figs. 9-19), such as plastic solids are prevented from passing through the bar screen 14. Sludge collects in the sludge hopper 30, and can be removed from the sludge hopper 30 through outlet 32. A scum and floatables trough 40 is provided to collect scum and floatables, as will be described in greater detail below. A handle 42 is connected to the scum and floatables trough 40 to control the angular position of the scum and floatables trough 40. A scum and floatables collection box 50 is in fluid communication with the scum and floatables trough 40. In Fig. 1, the scum and floatables collection box 50 is shown on the outside of the primary settling tank 10 but in other embodiments the scum and floatables collection box 50 is inside the primary settling tank 10.

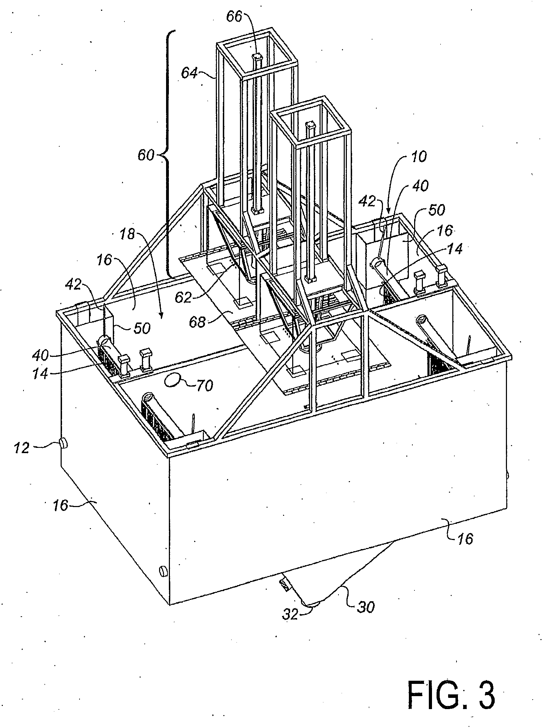

Referring to FIG. 3, the primary settling tank 10 is shown with the screen box assembly 60, which includes a screen box 62, supporting framework 64, a hydraulic actuator 66 (a winch with pulley and cable may be used as well) and baffle plate 68. The position of the screen box determines the level of water in the primary settling tank 10. An overflow outlet 70 prevents water from flowing over the sides of the primary setting tank 10 if the water level rises too high.

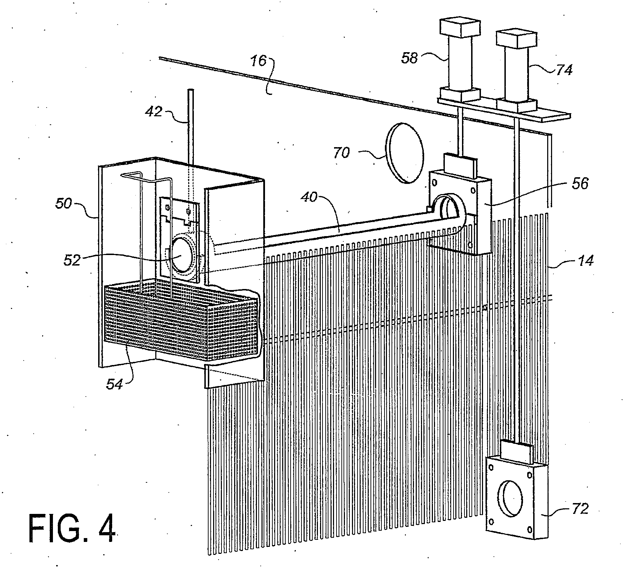

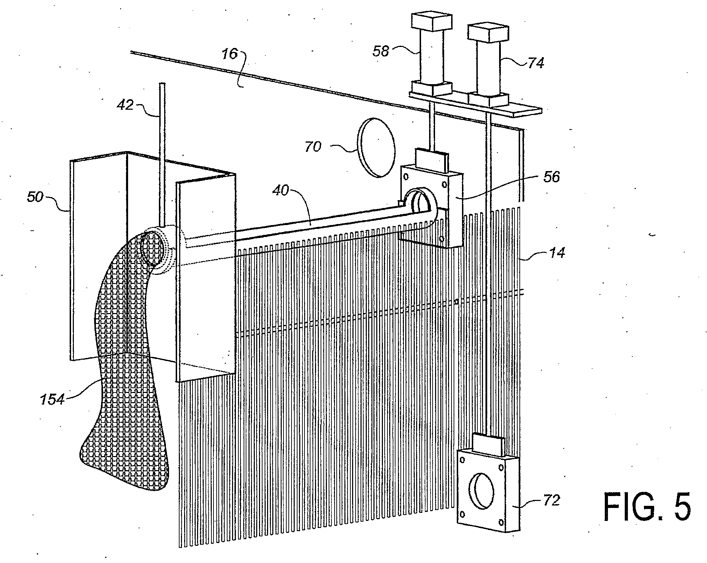

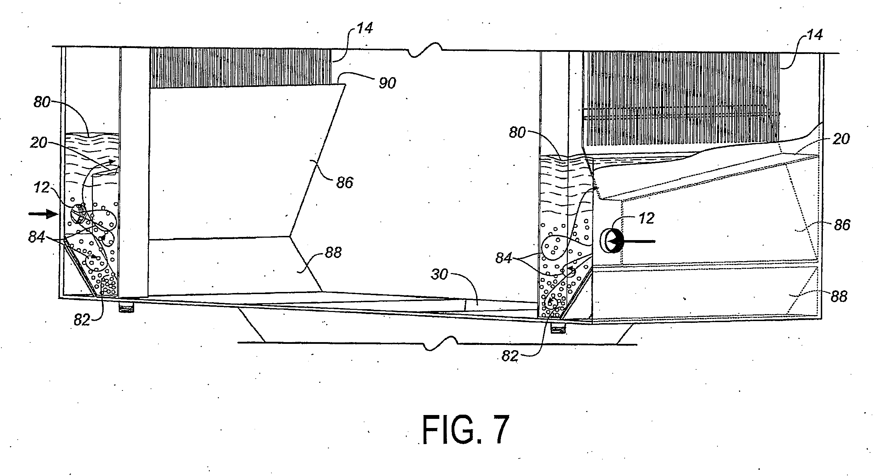

FIG. 4 shows the primary settling tank 10 with some of the outer walls 16 removed to reveal the internal components. The bar screen 14 is shown with the scum and floatables collection box 50 adjacent one side of the bar screen 14. The bottom of bar screen 14 is lower than the elevation of weir 86 (Fig. 7) thus increasing the bar screen / liquid contact area thus reducing the velocity through bar screen 14.The scum and floatables collection box includes a flap valve 52 which allows water, scum and floatables to enter the scum and floatables collection box 50 but prevents flow in the opposite direction.A screened basket 54 is provided in the scum and floatables collection box 50, which allows water to pass through. A valve 56 is provided at the end of the scum and floatables trough 40 to control the flow of water across the scum and floatables trough 40. Actuator 58 opens and closes the valve 56. A backwash valve 72 and actuator 74 are provided, the purpose of which will be described below. FIG. 5 shows the use of a porous bag 154 in place of the screened basket 54. Porous bag 154 operates in a manner similar to the screened basket 54.

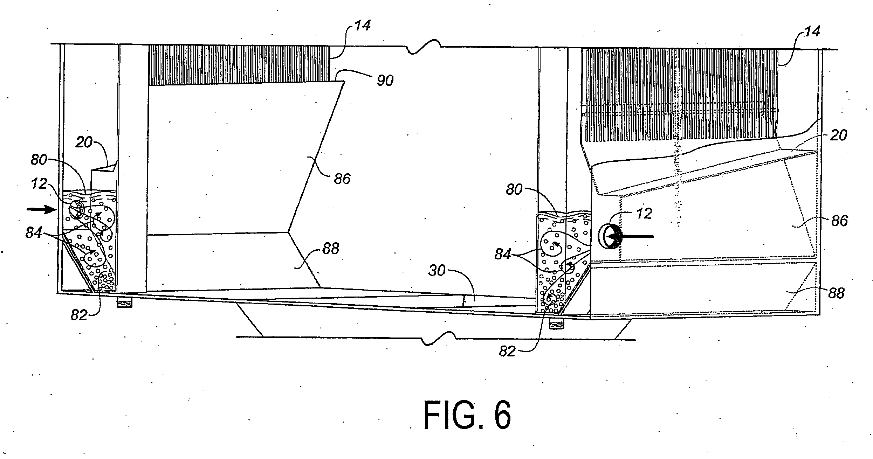

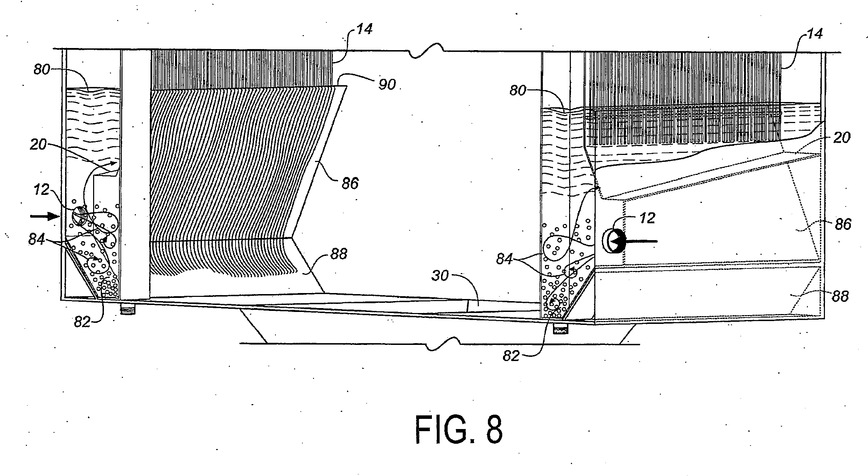

FIGS. 6-8 illustrate the fill cycle of the primary settling tank 10. Waste water 80 enters the primary settling tank through inlet 12. As it enters the influent feed basin 82 it becomes turbulent as represented by arrows 84. The water level rises to the influent feed trough 20 as shown in FIG. 7. A weir 86 is spaced away from the bar screen 14 and is placed at an angle of preferably 60 to 90 degrees from the horizontal. A bottom directional flow plate 88 slopes toward the sludge hopper 30. As shown in FIG. 8, water passing over the top edge 90 of the weir 86 flows down the exterior surface of weir 86 in generally laminar flow. This slope towards the wall increases the settling volume of the tank. Because the water flows down the surface of the weir 86 in laminar flow, there is no free fall of the liquid thus no air entrainment to improve the settling of sludge and sludge movement to the center hoppers.

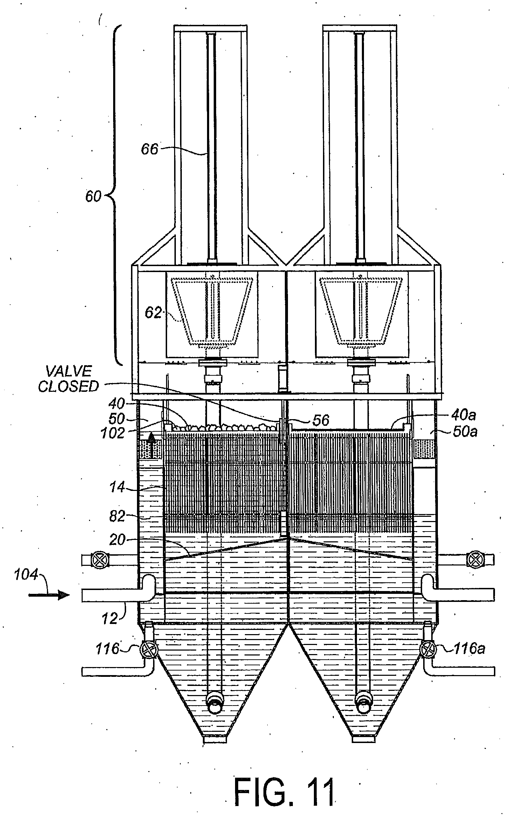

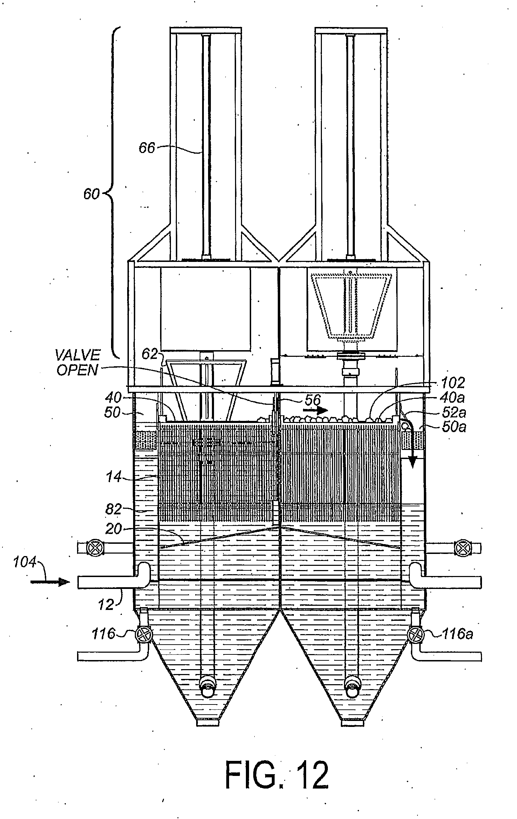

FIGS. 9 through 19 illustrate the floatables removal cycle. The floatables 102 are shown at various levels and positions throughout FIGS. 9 through 19. FIGS. 9 through 12 illustrate the floatables 102 removal cycle in a first direction. In FIG. 9 waste water, scum and floatables 102 enter through the influent pipe 12 into the influent feed basin 82 as represented by arrow 104. The floatables 102 are shown on the influent feed trough 20. The floatables 102 are too large to pass through the bar screen 14. FIG. 11 shows the floatables 102 which have risen to the top of the bar screen 14 and are in the scum and floatables trough 40. In FIG. 12, the valve 56 has been opened and the floatables 102 have been moved through valve 56 by the liquid above and in the trough across scum and floatables trough 40a, through flap valve 52a and into collection box 50a.

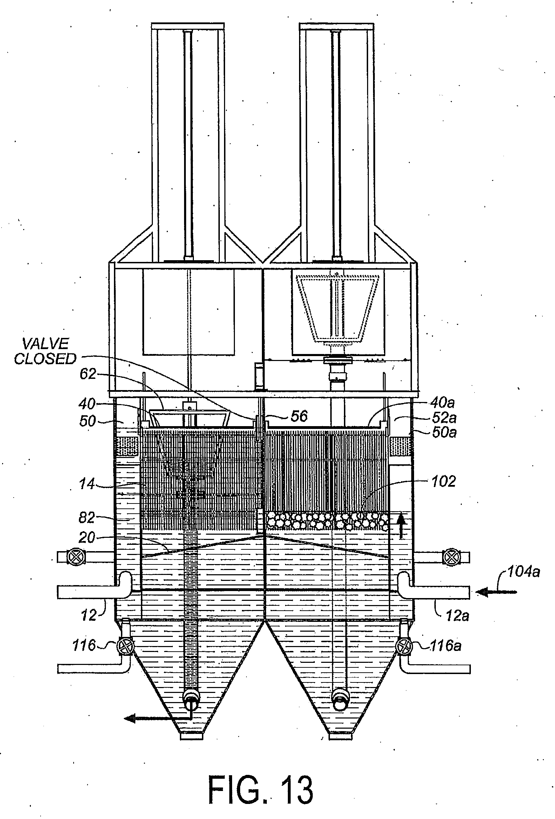

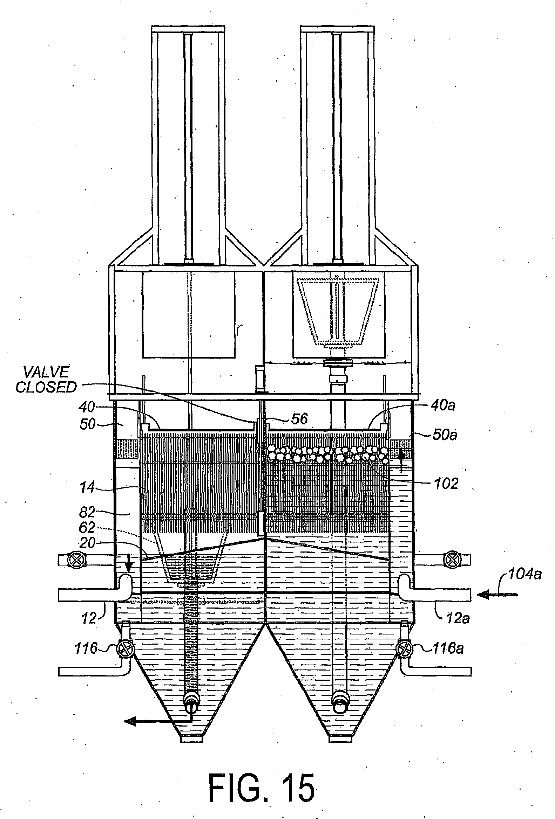

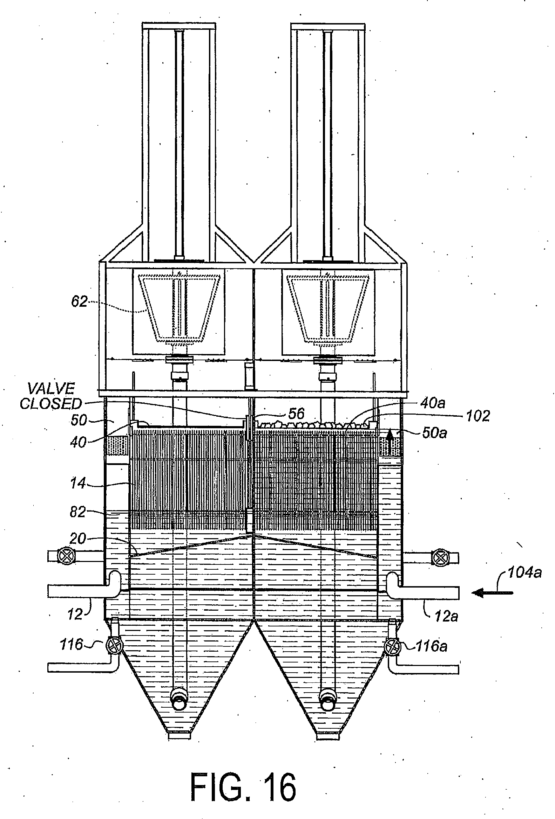

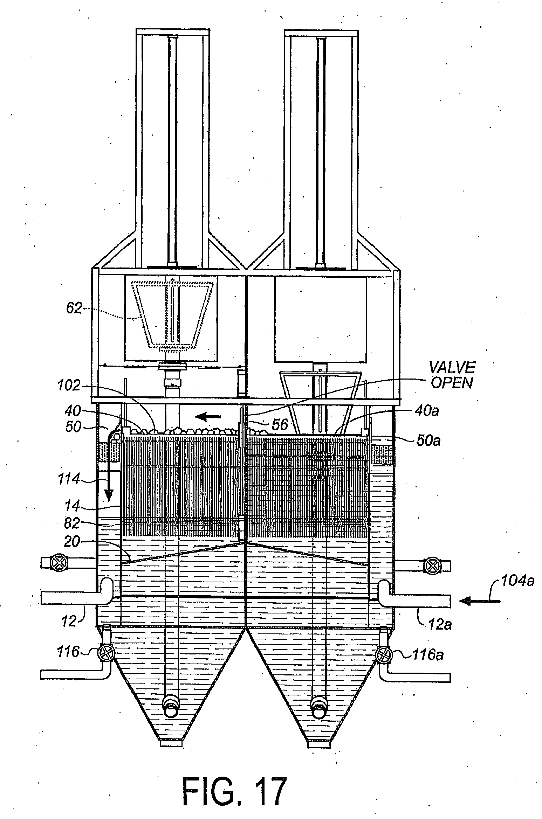

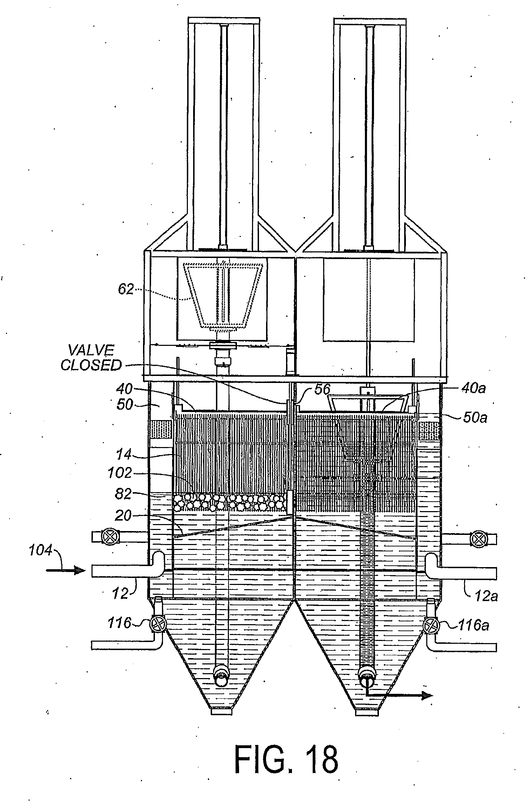

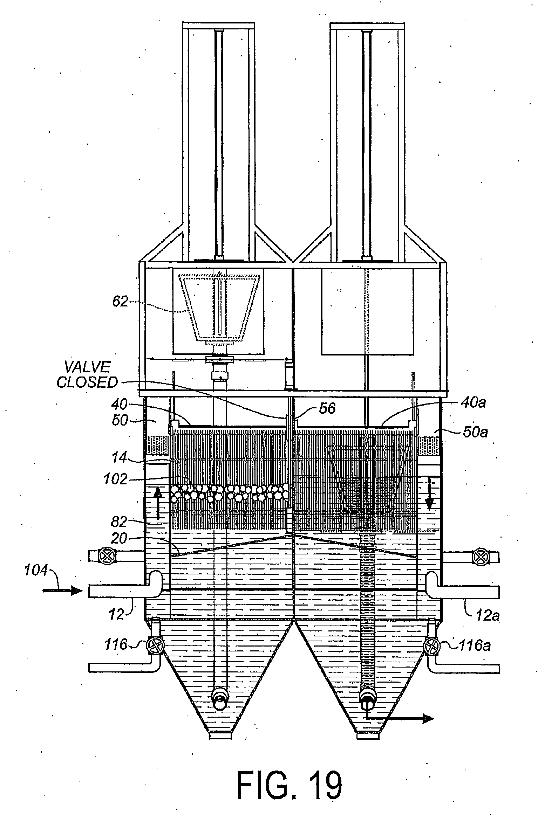

FIGS. 13 through 17 illustrate the floatables 102 removal cycle in the opposite direction. Waste water, scum and floatables enter through influent pipe 12a as illustrated by arrow 104a. As shown in FIG. 13, the floatables 102 move upward toward the scum and floatables trough 40a. In FIG. 15, the floatables 102 are approaching the scum and floatables trough 40a to be flushed through valve 56. FIG. 16 shows the floatables 102 ready to be flushed through valve 56, into scum and floatables trough 40 and into scum and floatables collection box 50. FIG. 17 shows the floatables 102 after they have been flushed through the valve 56 and the water represented by arrow 114 has flown through the floatables collection box 50 to exit through valve 116. FIGS. 18 and 19 illustrate the floatables 102 removal process starting over again.

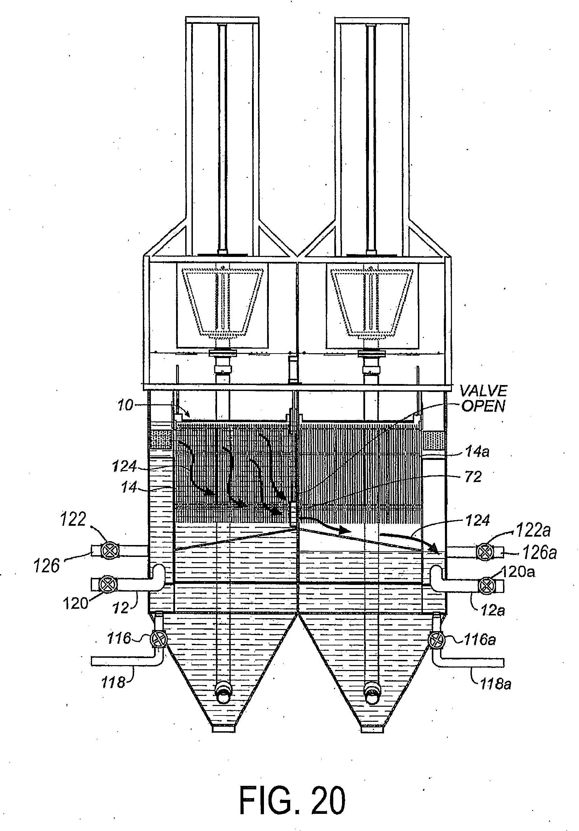

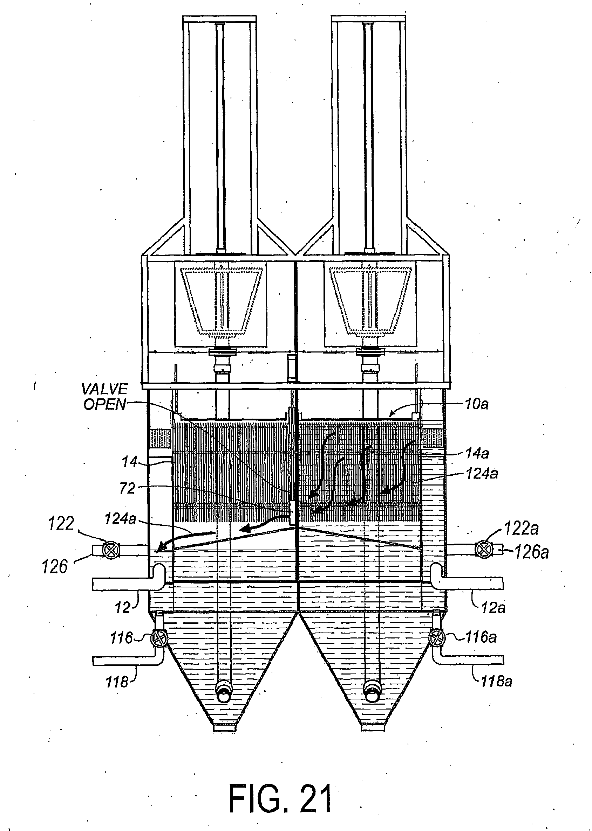

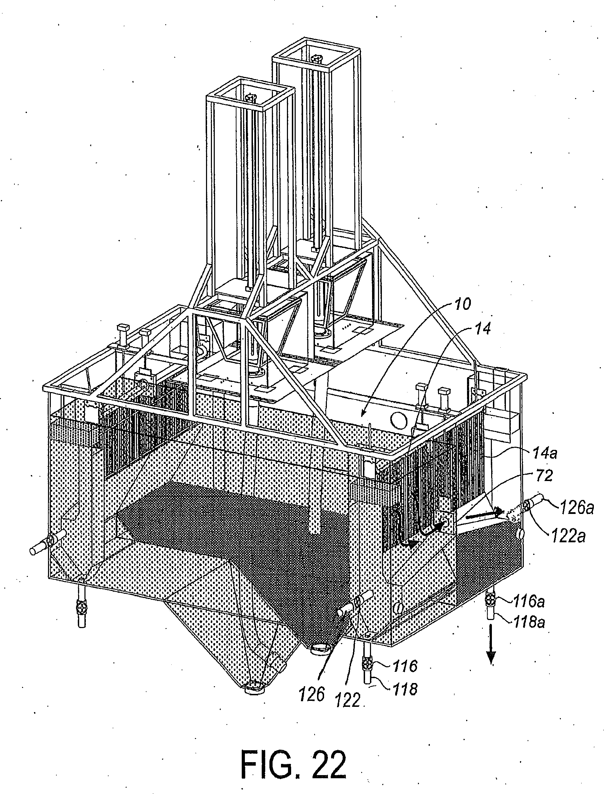

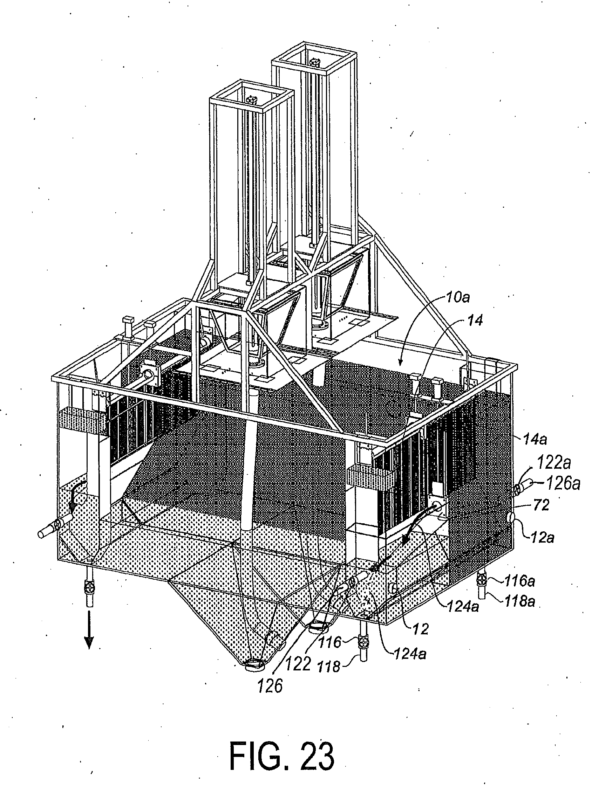

FIGS. 20 through 23 illustrate the bar screen 14 backwash cycle. Referring to FIGS 20 and 22, after the tank 10 has filled, inlet valve 120 is closed and backwash valve 72 is opened. Water, represented by arrows 124 flows through the bar screen 14, through valve 72, through valve 122a and out through outlet 126a. FIGS. 21 and 23 illustrates the backwash cycle for tank 10a. After tank 10a has filled, influent feed stops and backwash valve 72 is opened. Water represented by arrows 124a flows through the bar screen 14a, through valve 122 and through outlet 126.

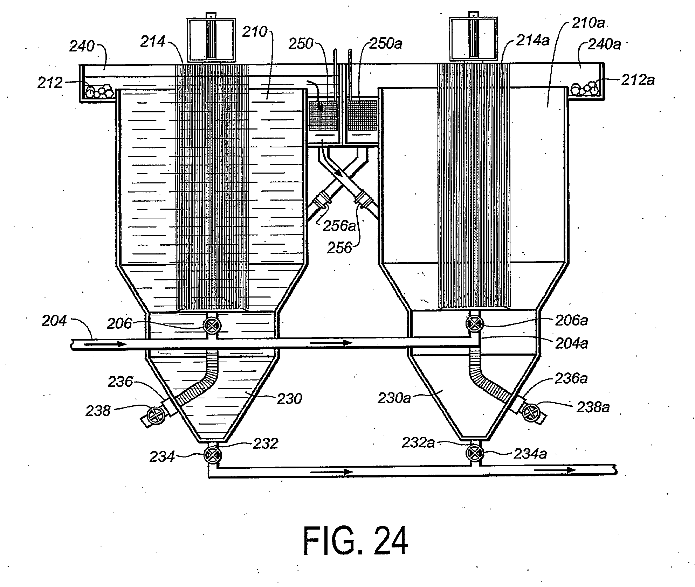

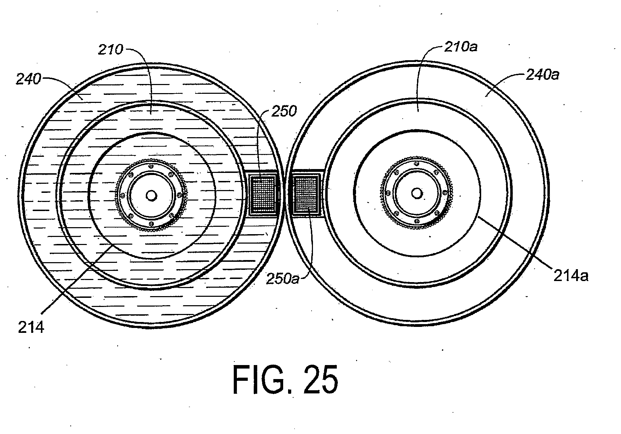

FIGS. 24 and 25 illustrate an alternative embodiment of the present system. The primary settling tanks 210 and 210a are circular. Scum and floatables troughs 240 and 240a surround tanks 210 and 210a. Bar screen cylinders 214 and 214a are in the center of the tanks 210 and 210a.In some applications, depending on the application and solids content of the liquid this bar screen may be omitted. Waste water enters tank 210 in the annular region between the outer wall of tank 210 and the bar screen cylinder 214 through pipe 204 and valve 206. Similarly, waste water enters tank 210a through pipe 204a and valve 206a. Scum and floatables collection boxes 250 and 250a are in fluid communication with scum and floatables troughs 240 and 240a. When valve 256 is opened, scum and floatables exit scum and floatables trough 240 and flow to collection box 250. In some embodiments, a flex connection is used instead of valve 256. The flex connection (not shown) would include a check valve on the connecting pipe to allow flow in only one direction. Similarly, when valve 256a is opened, scum and floatables 212a exit scum and floatables trough 240a and flow to collection box 250a. Sludge collects in sludge hoppers 230 and 230a and exits through pipes 232 and 232a and valves 234 and 234a. Screened waste water exits tank 210 through drain pipes 236 and 236a and valves 238 and 238a.

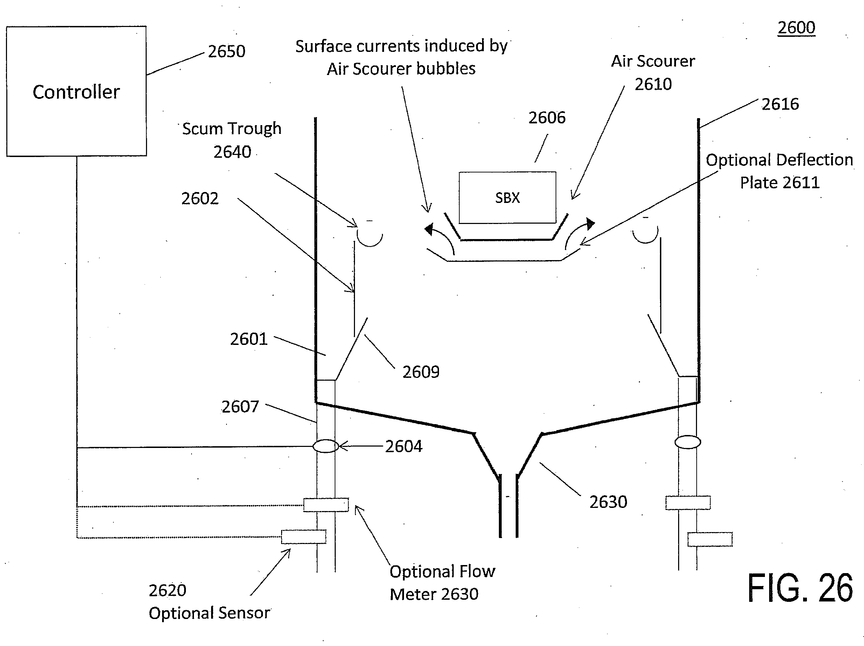

Improvements to the scum trough and methods for directing scum and floatables for efficient collection by the scum trough are described hereinbelow with respect to an exemplary single tank primary treatment system 2600 as shown in FIG. 26.

However, continuing with FIG. 26, before describing features of the trough and new efficient methods for feeding the trough in detail, components of an exemplary single tank primary treatment system 2600 are first described. A clarification tank 2616, also called a settling tank, has one or more influent feed systems (IFS) 2601 typically mounted adjacent to an inner surface of a wall of clarification tank 2616. An influent stream is typically flowed into IFS 2601 (influent coupling not shown in FIG. 26). Solids and sludge fall to the bottom of the one or more IFS 2601 and do not enter the clarification tank 2616 settling area beyond the IFS 2601. Influent fluid rises within the confines of IFS 2601and flows over weir 2609into the clarification tank 2616 settling area beyond the IFS 2601. On filling, influent fluid eventually tops the weir 2609, except for relatively large items that cannot pass through openings, such as, for example, openings of bar rack2609 over the weir 2609. Fluid topping the weir 2609passes into the clarification tank 2616, typically filling the clarification tank 2616 until the influent stream is valved off. As sedimentation begins in the clarification tank, biomass including some sludge and light fluffy organics collect in and near the bottom of clarification tank 2616 and in sludge hopper 2630.A separate drain at the bottom of sludge hopper 2630, after some settling time, typically drains the biomass including some sludge and light fluffy organics for later processing by other processes, such as, for example, by an anaerobic digester process. Sludge, solids, and some influent fluid can be gravity drained from IFS 2601 via IFS drain 2607 as controlled by IFS drain valve 2604.

In some embodiments, flow rateand/or time duration of flow of IFS discharge via IFS drain 2607, such as measured by an optional flow meter 2630, can bemonitored and/or controlled by a controller 2650. Similarly, any suitable type of sensor, such as indicated by optional sensor 2620can be added to the IFS drain 2607 line for optional monitoring of a fluid, fluid organic content, or fluid suspension parameter of interest by controller 2650.

In most embodiments, a screen box assembly 2606 is operated following stratification of the influent fluid in the clarification tank 2616, such as by raising screen box assembly 2606 from within an upper more clarified part of the influent fluid and causing a gravity discharge of relatively clear effluent via a hose or pipe not shown in FIG. 26. Suitable SBX are described in co-pending U.S. Patent Application Ser. No. 14/142,197, METHOD AND APPARATUS FOR A VERTICAL LIFT DECANTER SYSTEM IN A WATER TREATMENT SYSTEM by Wright. The '197 application is incorporated herein by reference in its entirety for all purposes.

As has been described hereinabove, with regard to other embodiments, as well as for single tank embodiments,following some settling time the upper sedimentary layer has the most clear influent fluid. Most remaining sludge and biomaterials, including the light fluffy organics sink to the bottom and eventually enter the sludge hopper 2630. At and near the top surface of the fluid in the clarification tank 2616, remaining scum and floatables can be removed by use of a scum trough 2640.

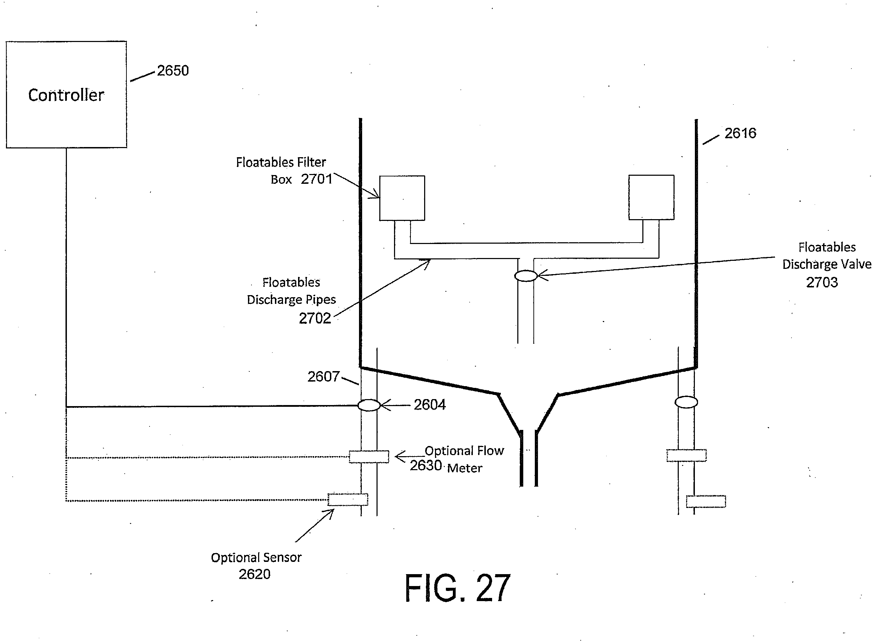

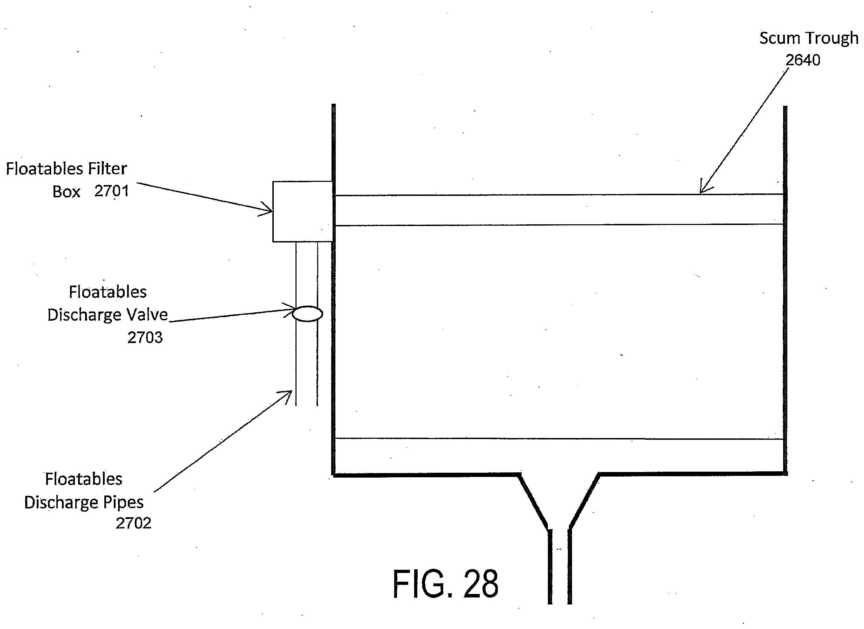

In some embodiments of a primary treatment system, such as for example, single tank primary treatment system 2600, one or more scum troughs 2640 can empty into a floatables filter box 2701, mounted on the outside of a clarification tank 2616, such as is shown in FIG. 27 and FIG. 28. Fluid and suspensions not removed by floatables filter box 2701 can be drained via floatables discharge pipes 2702. As shown in FIG. 27, one, two or more floatables discharge pipes 2702 can be directed towards a combined drain. One or more floatables discharge pipe valves can be disposed at any suitable location in a floatables discharge pipe, such as, for example, in the combined drain as shown in FIG. 27.

FIG. 28 shows a drawing of a view orthogonal to the view of FIG. 27 showing how a scum trough 2640 (within a clarification tank 2616) can be fluidly coupled to a floatables discharge pipe 2702 via floatables filter box 2701 mounted on or adjacent to an exterior surface of a clarification tank 2616.

In the description which follows hereinbelow, new types of scum trough 2640 are described. Also, several new methods to more efficiently direct scum and floatables into the scum trough 2640 are described.

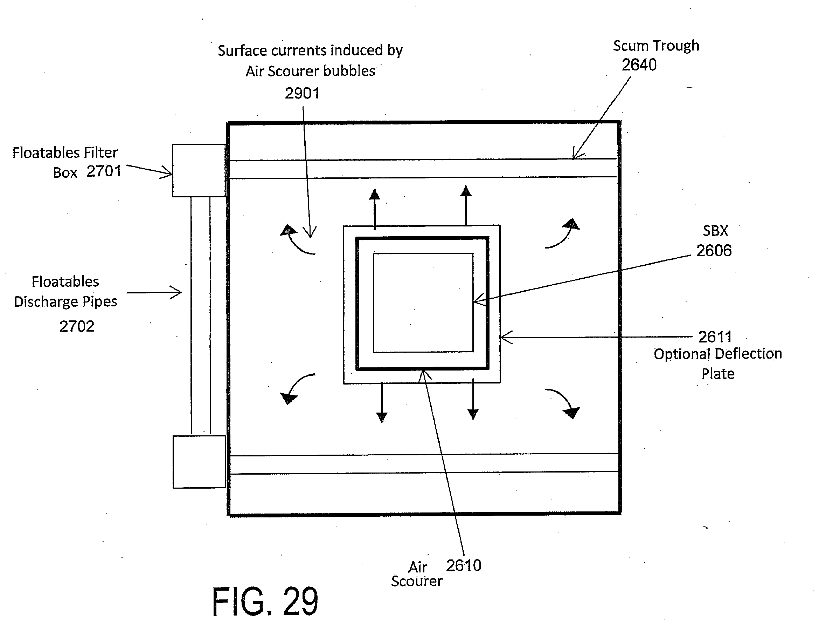

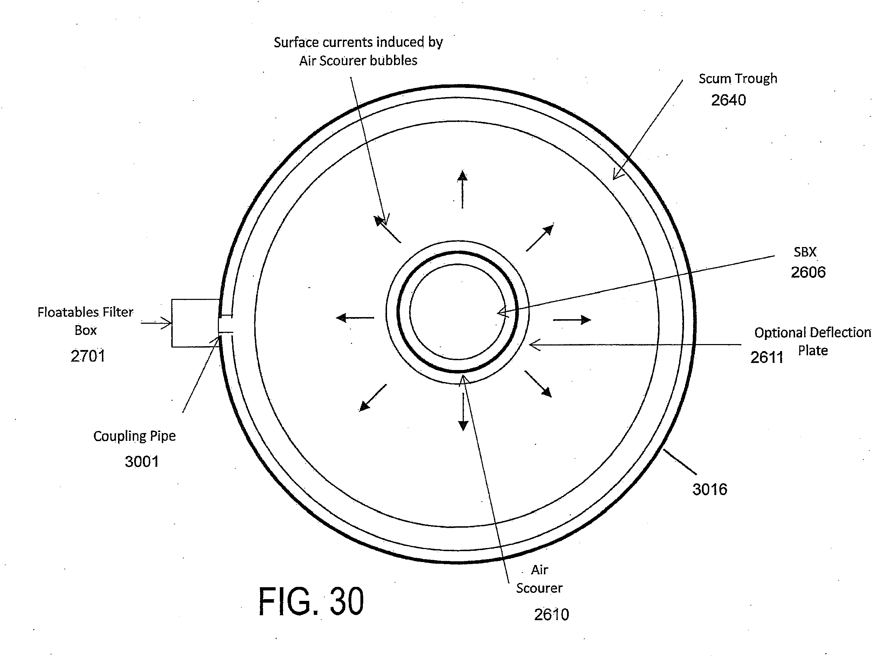

Air scouring process: FIG. 29 shows another exemplary embodiment of a single tank single tank primary treatment system where the clarification tank is square. It is unimportant whether the clarification tank is square, rectangular, has a polygon shape, or is elliptical or circular in shape. In the exemplary embodiment of FIG. 29, trough in-take of scum and floatables to a scum trough 2640 is made more efficient by an air scouring process, such as, for example, by using bubbles generated in the fluid to lift floatables or scum above a height of the mouth of the trough and/or to assist in directing the motion of the floatables and scum to the intake of the trough. FIG. 30 shows another exemplary embodiment of a single tank primary treatment system where the clarification tank is circular in shape.

Surge waves: In yet other embodiments of a primary treatment system, trough in-take of scum and floatables to a scum trough 2640 can be made more efficient by causing surge waves that lift floatables or scum above a height of the mouth of the trough. Surge waves can be generated by any suitable means, such as, for example, by rapid raising and lowering of the SBX by a sufficient amount to generate surge waves.

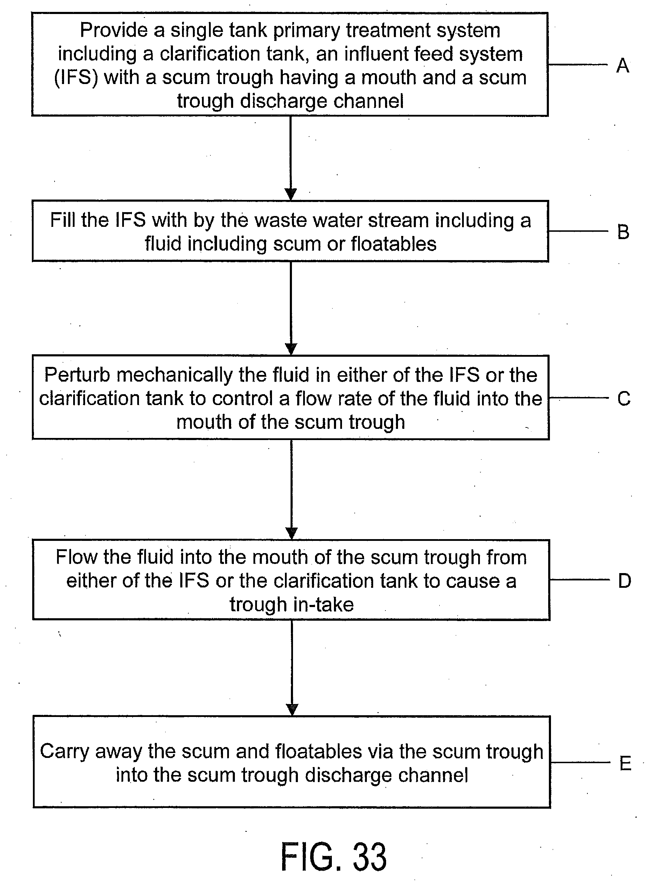

FIG. 33 shows a flow chart of a corresponding method to remove scum and floatables from a waste water stream, such as, for example by an Air scouring process, or by surge waves. The method of FIG. 33 includes the steps of: A) Provide a single tank primary treatment system including a clarification tank, an influent feed system (IFS) with a scum trough having a mouth and a scum trough discharge channel; B) Fill the IFS with by the waste water stream including a fluid including scum or floatables; C) Perturb mechanically the fluid in either of the IFS or the clarification tank to control a flow rate of the fluid into the mouth of the scum trough; D) Flow the fluid into the mouth of the scum trough from either of the IFS or the clarification tank to cause a trough in-take; and E) Carry away the scum and floatables via the scum trough into the scum trough discharge channel.

Lowering the trough: In other embodiments of a primary treatment system, trough in-take of scum and floatables to a scum trough 2640 can be made more efficient by lowering the trough with respect to a surface of fluid in the IFS.

Raising the level of fluid in the clarification tank: Turning back to FIG. 27, in-take can also be accomplished by raising the level of the fluid in the tank above the level of the scum trough and then opening the floatables discharge valve 2703. Solids and scum often have a density such that they float on the surface of the tank fluid or slightly below the surface of the tank fluid, e.g., 1". Accordingly, in some embodiments, in-take can also be accomplished by raising the level of the fluid in the tank by about 1"-2" above the level of the scum trough.

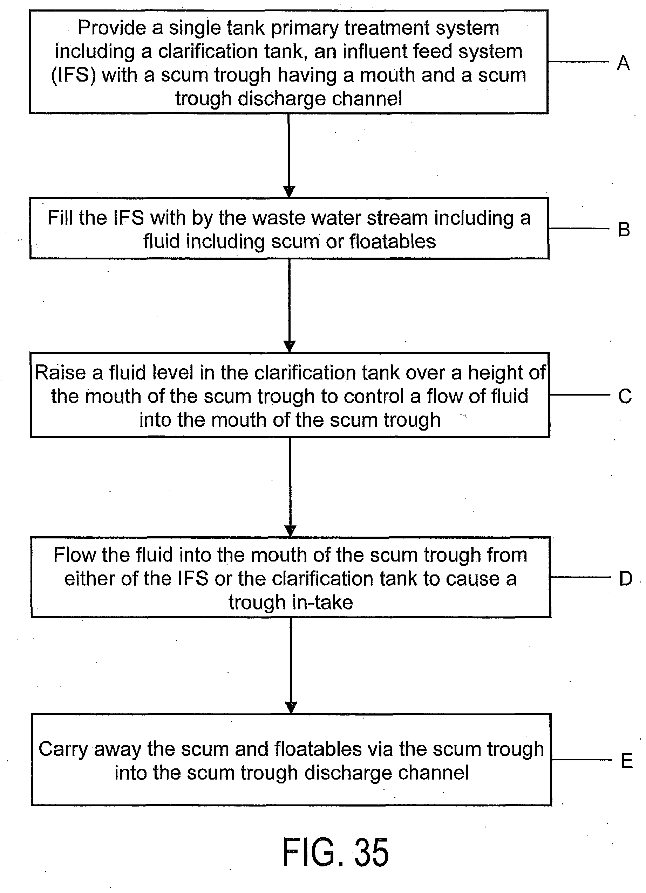

FIG. 35 shows a flow chart of a corresponding method to remove scum and floatables from a waste water stream, such as, for example by raising the fluid level in the clarification tank. As shown in the flow chart of FIG. 35, a method to remove scum and floatables from a waste water stream including the steps of: A) Provide a single tank primary treatment system including a clarification tank, an influent feed system (IFS) with a scum trough having a mouth and a scum trough discharge channel; B) Fill the IFS with the waste water stream with a fluid including scum or floatables; C) Raise a fluid level in the clarification tank over a height of the mouth of the scum trough to control a flow of fluid into the mouth of the scum trough; D) Flow the fluid into the mouth of the scum trough from either of the IFS or the clarification tank to cause a trough in-take; and E) Carry away the scum and floatables via the scum trough into the scum trough discharge channel.

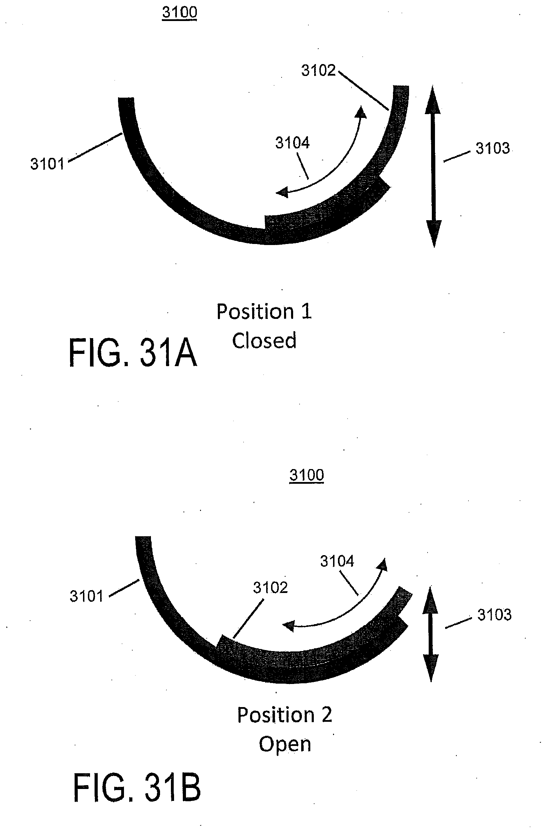

FIG. 31A and FIG. 31B shows a side view of one exemplary embodiment of a new type of articulating scum trough 3100 suitable for use in an apparatus to remove scum and floatables as described hereinabove. FIG. 31A shows an exemplary articulating scum trough in a closed position. The vertical arrows 3103 in FIG. 31A and FIG. 31B show the height the fluid level rises to from below the scum trough before scum and floatables can typically enter the scum trough in the "closed position" of FIG. 31A. Trough section 3101 and trough section 3102 are shown as cylindrically slidingly coupled to each other. Trough section 3101 and trough section 3102 have a similar curved or cylindrical section shape about orthogonal to a long or longitudinal trough length direction. The direction of sliding motion is indicated by curved arrows 3104. In some embodiments, trough section 3101 can be fixed mounted directly or indirectly to the clarification tank, while trough section 3102 in cylindrical sliding engagement with trough section 3101 can be slidingly rotated to open or close the scum trough. In some embodiments an opposite member can be fixed, or in other embodiments, both trough section 3101 and trough section 3102 could be rotatingly moved. FIG. 31B shows the exemplary articulating scum trough in an open position where the smaller arrow demonstrates the height of the mouth of the scum trough with respect to the bottom of the scum trough.In embodiments where both trough sections can be rotating moved, it is also contemplated that one section could be lowered while the other remains closed, thus encouraging in-take of scum and floatables selectively from either side of the scum through.

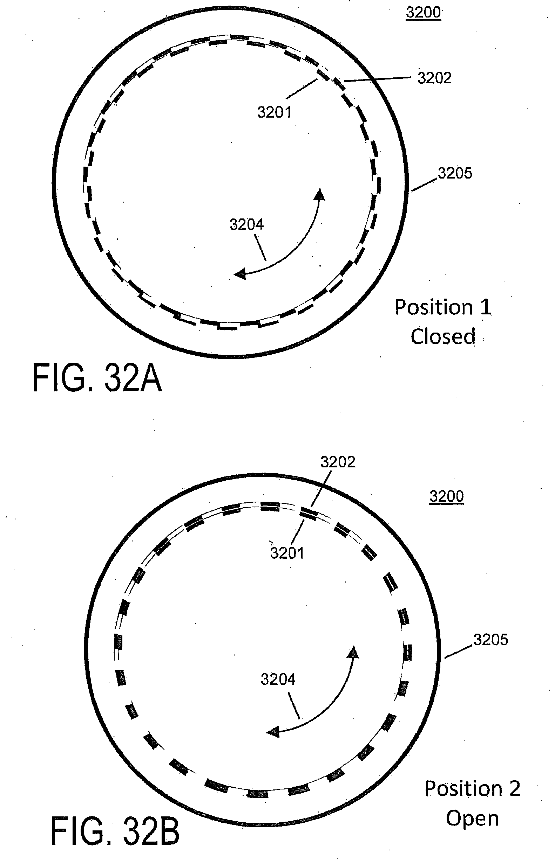

FIG. 32A and FIG. 32B shows a top view of one exemplary embodiment of a rotationally articulating scum trough 3200 suitable for use as an apparatus to remove scum and floatables in a treatment system such as the treatment systems described hereinabove. FIG. 32A shows the exemplary rotationally articulating scum trough 3200 in a closed position. FIG. 32B shows the exemplary rotationally articulating scum trough 3200 in an opened position. Two sections, each circular sections in FIG. 32A and FIG. 32B, rotate with respect to each other as indicated by curved arrows 3204. Both sections have teeth or other suitable flat or curved sections of sheet material such as teeth 3201 and teeth 3202. Both sets of teeth are spaced with open sections between the teeth 3201 and between teeth 3202. As shown in FIG. 32A, in the closed position, the gaps between teeth of one ring of teeth, match the teeth of the adjacent rotatable circular row of teeth substantially closing off any of the gaps by an adjacent tooth of the adjacent ring of teeth. In FIG. 32B one or both rings of teeth have been rotated with respect to the other so that each of the teeth 3201 and teeth 3202 are substantially next to each other. In this position of teeth 3201 and teeth 3202, the gaps are substantially open to allow fluid to flow into the scum trough. It is unimportant whether only one ring of teeth rotates with respect to the other, or if both rings of teeth can rotate. In the exemplary embodiments of FIG. 32A and FIG. 32B, the inner "wall" of the scum trough is opened or closed to fluid as described hereinabove, while the outer wall 3205 is a solid trough wall. In other embodiments, the order of the teeth wall and the solid wall could be reversed. Or, both the inner wall and the outer wall could be controllable teeth walls.

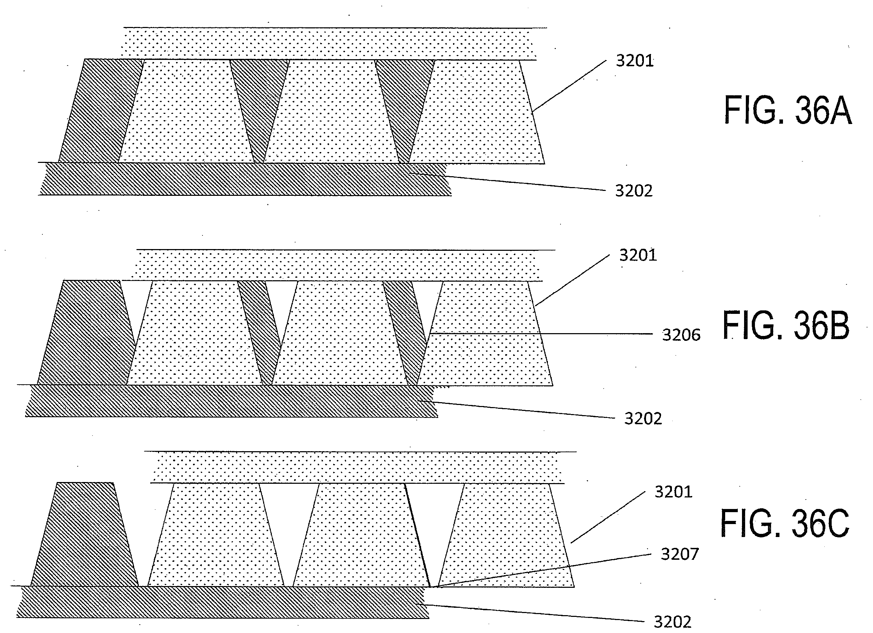

FIG. 36A, FIG. 36B and FIG. 36C show an exemplary embodiment of a portion of the rotationally articulating scum trough 3200 of FIG. 32A and FIG. 32B. Section 3201 and section 3202 have teeth that are angled with respect to the direction of rotational movement. With reference to FIG. 32B, when section 3201 and 3202 are rotated to partially open the gap between the teeth, fluid flows into the scum trough from a first settling tank fluid level 3206. With reference to FIG. 32C, section 3201 and 3202 are rotated to fully open the gap between the teeth, fluid flows into the scum trough from a second settling tank fluid level 3207.

A prototype system employs the method of: A) Providing a single tank primary treatment system including a clarification tank, an influent feed system (IFS) with a scum trough having a mouth and a scum trough discharge channel; B) Filling the IFS with the waste water stream with a fluid including scum or floatables; C) Raising a fluid level in the clarification tank over a height of the mouth of the scum trough to control a flow of fluid into the mouth of the scum trough; D) Flowing the fluid into the mouth of the scum trough from either of the IFS or the clarification tank to cause a trough in-take; and E)Carrying away the scum and floatables via the scum trough into the scum trough discharge channel.

Compared with existing systems, the complexity reduction of the new apparatus, systems, and methods with regard to dual tank or single tank treatment systems and new scum troughs and methods as described hereinabove improves system reliability and reduces system maintenance. For example, fewer mechanical parts are used in the relatively simple gravity flow of fluid for collecting unwanted scum and floatables. Also, unwanted scum and floatables are removed early in the treatment process, thus eliminating a source of scum and floatables that could foul equipment and/or processes that occur downstream of this initial scum and floatable removal step. Also, floatables can be washed.

The invention is defined by the appended independent claims. Any information falling outside the scope of the claims is for explanation only.

It is understood that any controllers described hereinabove include firmware and/or software typically supplied or present in a system on a computer readable non-transitory storage medium. A computer readable non-transitory storage medium as non-transitory data storage includes any data stored on any suitable media in a non-fleeting manner. Such data storage includes any suitable computer readable non-transitory storage medium, including, but not limited to hard drives, non-volatile RAM, SSD devices, CDs, DVDs, etc.

The invention may further be summarized as follows:
A system to remove scum and floatables from a waste water stream comprising the steps of:
providing a single tank primary treatment system including a clarification tank, an influent feed system (IFS), a scum trough having a mouth and a scum trough discharge channel;
using said IFS to fill said clarification tank with a waste water stream comprising a fluid including scum or floatables;
adjusting a position of said scum trough or a structural member of said scum trough to control a flow of fluid into said mouth of said scum trough from said clarification tank to cause a trough in-take; and
carrying away said scum and floatables via said scum trough through said scum trough discharge channel.

A system to remove scum and floatables from a waste water stream wherein said step of adjusting said position of said scum trough comprises adjusting said position of said scum trough by lowering or rotating said structural member of said trough with respect to a surface of a fluid in said clarification tank.

## Claims

1. A waste water treatment system comprising;
at least a first primary settling tank (10; A) and a second primary settling tank (10; B) configured to carry out the processes of grit removal, sludge removal, primary clarification, and fine screening, the primary settling tanks (10; A, B) in operation having a waste water level which changes over time between a high level near the top of the primary settling tanks (10; A, B) and a low level near the bottom of the primary settling tanks (10; A, B);
each primary settling tank (10; A, B) having a fine screen box (62) which moves in vertical location, between a low level nearer the bottom of the primary settling tank (10; A, B) and a high level nearer the top of the primary settling tank (10; A, B);
the fine screen boxes (62) include a water outlet for removal of screened waste water from within the fine screen boxes (62), the fine screen boxes (62) having fine screen material, the fine screen material having openings of a first size;
each primary settling tank (10; A, B) having a bar screen (14) having screen openings of a second size larger than the openings of the first size, the bar screen (14) located in an influent feed trough (20) with a bottom of the bar screen (14) being lower than an elevation of a weir (86) in the influent feed trough (20),
each primary settling tank (10; A, B) having a water inlet (12) for introducing waste water to the primary settling tank (10; A, B), the waste water containing scum and floatables, each primary settling tank (10; A, B) having a water inlet area separated from an interior portion by the bar screen (14),
each primary settling tank having a scum and floatables trough (40) on a side of the bar screen (14) opposite the water inlet (12) for collecting scum and floatables which pass through and over a top edge of the bar screen (14), the scum and floatables troughs (40) of the first primary settling tank (10; A), and of the second primary settling tank (10; B) are in fluid communication with one another and separated by a scum valve (56) such that when the scum valve (65) is open, scum, floatables and water in the scum and floatables trough (40) flow from the scum and floatables trough (40) of the first primary settling tank (10; A, B) to the scum and floatables trough (40) of the second primary settling tank (10; A, B), each scum and floatables trough (40) having a collection container (54; 154) for collecting the scum and floatables that flow through the scum and floatables trough (40).

2. The waste water treatment system of claim 1 wherein the collection container (54; 154) is in the form of a basket (54).

3. The waste water treatment system of claim 1 wherein the collection container (54; 154) is in the form of a bag (154).

4. The waste water treatment system of claim 2 wherein the basket (54) retains the floatables and allows the water to pass through the basket (54) washing the floatables captured in the basket (54).

5. The waste water treatment system of claim 3 wherein the bag (154) retains the floatables and allows the water to pass through the bag (154) washing the floatables captured in the bag (154).

6. The waste water treatment system of any one of the preceding claims, wherein the first primary settling tank (10; A) and the second primary settling tank (10; B) are fluidly connected via a backwash valve (72).

7. The waste water treatment system of claim 6, wherein the backwash valve (72) is located in a wall element connecting the first and second primary settling tanks (10; A, B) at a heights of the lower end of the respective bar screens (14).

## Patentansprüche

1. Abwasserbehandlungssystem, welches Folgendes aufweist:
zumindest einen primären Absetztank (10; A) und einen zweiten primären Absetztank (10; B), die konfiguriert sind, um die Vorgänge einer Sandentfernung, Schlammentfernung, Primärklärung und Feinsiebung auszuführen, wobei die primären Absetztanks (10; A, B) im Betrieb ein Abwasserniveau haben, welches sich mit der Zeit zwischen einem hohen Niveau nahe dem Oberteil der primären Absetztanks (10; A, B) und einem niedrigen Niveau nahe dem Unterteil der primären Absetztanks (10; A, B) ändert;
wobei jeder primäre Absetztanks (10; A, B) einen Feinsiebkasten (62) hat, der sich in vertikaler Lage bewegt, und zwar zwischen einem unteren Niveau näher am Unterteil des primären Absetztanks (10; A, B) und einem hohen Niveau näher am Oberteil des primären Absetztanks (10; A, B);
wobei die Feinsiebkästen (62) einen Wasserauslass zur Entfernung von gesiebtem Abwasser von innerhalb der Feinsiebkästen (62) aufweisen, wobei die Feinsiebkästen (62) Feinsiebmaterial aufweisen, wobei das Feinsiebmaterial Öffnungen mit einer ersten Größe hat;
wobei jeder primäre Absetztank (10; A, B) einen Stangenrost (14) hat, der Sieb- bzw. Rostöffnungen von einer zweiten Größe hat, die größer sind als die Öffnungen der ersten Größe, wobei der Stangenrost (14) in einer Einflusseinleitungswanne (20) angeordnet ist, wobei ein Unterteil des Stangenrostes (14) niedriger ist als ein Höhe eines Wehrs (86) in der Einflusseinleitungswanne (20),
wobei jeder primäre Absetztank (10; A, B) einen Wassereinlass (12) zum Einleiten von Abwasser in den primären Absetztank (10; A, B) hat, wobei das Wasser Schaum und Schwimmstoffe enthält, wobei jeder primäre Absetztank (10; A, B) einen Wassereinlassbereich hat, der von einem inneren Teil durch den Gitterrost (14) getrennt ist,
wobei jeder primäre Absetztank (10; A, B) eine Schaum- und Schwimmstoffwanne (40) auf einer Seite des Stangenrostes (14) gegenüberliegend zum Wassereinlass (12) hat, um Schaum und Schwimmstoffe zu sammeln, die durch den Gitterrost (14) und über eine obere Kante des Gitterrostes (14) hindurchgehen, wobei die Schaum- und Schwimmstoffwannen (40) des ersten primären Absetztanks (10; A) und des zweiten primären Absetztanks (10; B) in Strömungsmittelverbindung miteinander sind und durch ein Schaumventil (56) getrennt sind, so dass, wenn das Schaumventil (56) offen ist, Schaum, Schwimmstoffe und Wasser in der Schaum- und Schwimmstoffwanne (40) von der Schaum- und Schwimmstoffwanne (40) des ersten primären Absetztanks (10; A, B) zu der Schaum- und Schwimmstoffwanne (40) des zweiten primären Absetztanks (10; A, B) fließen, wobei jede Schaum- und Schwimmstoffwanne (40) einen Behälter (54; 154) hat, um den Schaum und die Schwimmstoffe zu sammeln, die durch die Schaum- und Schwimmstoffwanne (40) fließen.

2. Abwasserbehandlungssystem nach Anspruch 1, wobei der Sammelbehälter (54; 154) in Form eines Korbs (54) ist.

3. Abwasserbehandlungssystem nach Anspruch 1, wobei der Sammelbehälter (54; 154) in Form eines Sacks (154) ist.

4. Abwasserbehandlungssystem nach Anspruch 2, wobei der Korb (54) Schwimmstoffe zurückhält und gestattet, dass das Wasser durch den Korb (54) läuft, wobei die Schwimmstoffe gewaschen werden, die in dem Korb (54) eingefangen werden.

5. Abwasserbehandlungssystem nach Anspruch 3, wobei der Sack (154) Schwimmstoffe zurückhält und gestattet, dass Wasser durch den Sack (154) läuft, wobei die Schwimmstoffe gewaschen werden, die in dem Sack (154) eingefangen werden.

6. Abwasserbehandlungssystem nach einem der vorhergehenden Ansprüche, wobei der erste primäre Absetztank (10; A) und der zweite primäre Absetztanks (10; B) strömungsmittelmäßig über ein Rückstromventil (72) verbunden sind.

7. Abwasserbehandlungssystem nach Anspruch 6, wobei das Rückstromventil (72) in einem Wandelement angeordnet ist, welches die ersten und zweiten primären Absetztanks (10; A, B) verbindet, und zwar auf einer Höhe des unteren Endes der jeweiligen Stangenroste (14).

## Revendications

1. Système de traitement des eaux usées comprenant :
au moins un premier décanteur primaire (10 ; A) et un deuxième décanteur primaire (10 ; B) configurés pour mettre en oeuvre les processus d'élimination des gravillons, d'élimination des boues, de clarification primaire et de tamisage fin, les décanteurs primaires (10 ; A, B) ayant, en fonctionnement, un niveau d'eau usées qui varie dans le temps entre un niveau haut près du sommet des décanteurs primaires (10 ; A, B) et un niveau bas près du fond des décanteurs primaires (10 ; A, B) ;
chaque décanteur primaire (10 ; A, B) ayant un caisson à tamis fin (62) qui se déplace verticalement, entre un niveau bas plus près du fond du décanteur primaire (10 ; A, B) et un niveau haut plus près du sommet du décanteur primaire (10 ; A, B) ;
les caissons à tamis fins (62) comprenant une sortie d'eau pour éliminer les eaux usées tamisées de l'intérieur des caissons à tamis fins (62), les caissons à tamis fins (62) comportant un matériau de tamisage fin, le matériau de tamisage fin comportant des ouvertures d'une première dimension ;
chaque décanteur primaire (10 ; A, B) ayant un tamis à barres (14) ayant des ouvertures de tamis d'une deuxième dimension plus grandes que les ouvertures de la première dimension, le tamis à barres (14) étant situé dans une alimentation en affluent (20) avec une base du tamis à barres (14) plus basse que le niveau d'un déversoir (86) dans l'alimentation en affluent (20),
chaque décanteur primaire (10 ; A, B) ayant une entrée d'eau (12) pour introduire des eaux usées dans le décanteur primaire (10 ; A, B), les eaux usées contenant de la mousse et des objets flottants, chaque décanteur primaire (10 ; A, B) ayant une zone d'entrée d'eau séparée d'une partie intérieure par le tamis à barres (14),
chaque décanteur primaire ayant une gouttière à mousse et objets flottants (40) d'un côté du tamis à barres (14) opposé à l'entrée d'eau (12) pour collecter mousse et objets flottants qui passent à travers et au-dessus d'un bord supérieur du tamis à barres (14), les gouttières à mousse et objets flottants (40) du premier décanteur primaire (10 ; A) et du deuxième décanteur primaire (10 ; B) étant en communication fluide l'un avec l'autre et séparés par une vanne à mousse (56) de sorte que, lorsque la vanne à mousse (56) est ouverte, mousse, objets flottants et eau dans la gouttière à mousse et objets flottants (40) s'écoulent de la gouttière à mousse et objets flottants (40) du premier décanteur primaire (10 ; A, B) à la gouttière à mousse et objets flottants (40) du deuxième décanteur primaire (10 ; A, B), chaque gouttière à mousse et objets flottants (40) ayant un récipient collecteur (54 ; 154) pour collecter la mousse et les objets flottants s'écoulant à travers la gouttière à mousse et objets flottants (40).

2. Système de traitement des eaux usées selon la revendication 1, dans lequel le récipient collecteur (54 ; 154) a la forme d'un panier (54).

3. Système de traitement des eaux usées selon la revendication 1, dans lequel le récipient collecteur (54 ; 154) a la forme d'un sac (154).

4. Système de traitement des eaux usées selon la revendication 2, dans lequel le panier (54) retient les objets flottants et permet à l'eau de passer à travers le panier (54), lavant les objets flottants capturés dans le panier (54).

5. Système de traitement des eaux usées selon la revendication 3, dans lequel le sac (154) retient les objets flottants et permet à l'eau de passer à travers le sac (154), lavant les objets flottants capturés dans le sac (154).

6. Système de traitement des eaux usées selon l'une quelconque des revendications précédentes, dans lequel le premier décanteur primaire (10 ; A) et le deuxième décanteur primaire (10 ; B) sont en communication fluide via une vanne de lavage à contre-courant (72).

7. Système de traitement des eaux usées selon la revendication 6, dans lequel la vanne de lavage à contre-courant (72) est située dans un élément de paroi raccordant les premier et deuxième décanteurs primaires (10 ; A, B) à une hauteur de l'extrémité inférieure des tamis à barres respectifs (14).
